# EUROPEAN PATENT APPLICATION

(11) **EP 4 834 093 A1**
(43) Date of publication of application: **04.11.2026**
(21) Application number: 24911415.8
(22) Date of filing: 27.12.2024
(51) Int. Cl.: A01D 69/02

(54) **OUTDOOR GARDEN WORK VEHICLE AND RIDING MOWER**

(30) Priority: 29.12.2023 CN 202311856724; 29.12.2023 CN 202311853833; 29.12.2023 CN 202311853828; 29.12.2023 CN 202311853829
(71) Applicant: Jiangsu Dongcheng M&E Tools Co., Ltd., Nantong, Jiangsu 226244 (CN)
(72) Inventor: YU, Wanzhao, Nantong, Jiangsu 226244 (CN); ZHANG, Shengwen, Nantong, Jiangsu 226244 (CN); FU, Huixing, Nantong, Jiangsu 226244 (CN)
(74) Representative: Winter, Brandl - Partnerschaft mbB
(86) International application number: PCT/CN2024/143011
(87) International publication number: WO 2025/140494

(57) **Abstract**

The present disclosure provides an electric outdoor garden working vehicle, including: a frame, a left drive axle assembly, a right drive axle assembly, a mowing mechanism, a power supply unit, and a braking module. The braking module includes a parking and service brake assembly and a foot brake pump. The parking and service brake assembly includes a foot pedal assembly. When depressed by a user, the foot pedal assembly presses the foot brake pump to generate a braking force on the left drive axle assembly and the right drive axle assembly. A hydraulic brake force damping adjustment mechanism is provided at the foot brake pump for allowing the foot pedal assembly to be further depressed after hydraulic oil inside the foot brake pump has been compressed to a limit. Thus, during an entire depression process of the foot pedal assembly, the user does not experience a feedback of the brake being "too hard". Moreover, the damping member has an initial damping force after assembly, such that a pedal rebound force experienced by the user during the entire depression process of the foot pedal assembly gradually increases without any interval where the rebound force increases significantly, thereby improving the user's overall braking experience.

## Description

This application claims the priorities to Chinese Patent Application No. 202311853829.1, filed with the China National Intellectual Property Administration on December 29, 2023, Chinese Patent Application No. 202311853828.7, filed with the China National Intellectual Property Administration on December 29, 2023, Chinese Patent Application No. 202311853833.8, filed with the China National Intellectual Property Administration on December 29, 2023, and Chinese Patent Application No. 202311856724.1, filed with the China National Intellectual Property Administration on December 29, 2023, the disclosure of which are incorporated herein by reference in their entireties.

### TECHNICAL FIELD

The present disclosure relates to the technical field of garden working vehicles, and in particular to an outdoor garden working vehicle.

### BACKGROUND

An outdoor garden working vehicle generally refers to a vehicle that performs garden working outdoors, and mainly includes a vehicle for cutting and maintaining turf on a lawn.

The entire vehicle of the garden working vehicle needs to travel on ground during operation, and thus is equipped with a brake component for braking. For example, Chinese Patent Publication No. CN207269396U discloses a brake and parking mechanism of an electric zero-turn lawn mower, and the brake and parking mechanism includes an operating mechanism and a braking mechanism. The operating mechanism is arranged at a front end of a vehicle frame, and includes a brake pedal and a parking pedal. The brake mechanism includes a hub motor connected to a wheel, and a brake caliper arranged on the vehicle frame. The brake caliper cooperates with a brake disc of the hub motor. With reference to the drawings of CN207269396U, it can be clearly seen that the brake disc is provided on a wheel axle. Although this patent can achieve a limited wheel braking effect, the brake caliper needs to provide a very large clamping torque to generate an effective braking force due to the brake disc being provided on the wheel axle, hindering a user from achieving a good braking effect by directly depressing the pedal.

To enable the vehicle to be effectively maintained at a certain position, a parking system is generally provided on the vehicle to maintain the vehicle's relative position during parking. For example, U.S. Patent No. US11589513B2 discloses an integrated parking brake system for a ride-on lawn care vehicle, including a parking brake device that is activated based on a result detected by an operator presence system as to whether there is an operator in the vicinity of an electric off-road working vehicle. The operator presence system can send a signal to a controller, and the controller may command the parking brake device to switch between an engaged state and a non-engaged state. In US11589513B2, a braking operation and a parking operation are significantly different, whereas according to user operating habits, a larger braking force may cause the vehicle to be equivalent to a parking state or directly enter the parking state. Therefore, the operating mechanism of this patent is difficult for users to adapt.

Braking generally involves pressing or depressing a certain component to apply a braking force to a brake system. However, due to the structural limitations of a brake disc in the brake system, a friction pad that abuts against the brake disc cannot continue to move once fully abutting with the brake disc, which avoids the user from continuing pressing or depressing the component and thus results in an "overly hard" brake feel, degrading the user's experience. For example, Chinese Patent Publication No. CN114684080B discloses a braking system for an electric lawn mower, which integrates service braking, emergency braking, and parking braking functions through a brake operating assembly. However, CN114684080B provides a lower limit bolt to limit a position of a pedal, which obviously avoids the pedal from being further depressed upon braking, resulting in an " overly hard" brake feel. Moreover, in this patent, a second depression of the brake pedal in a parking state releases the parking state, which increases the possibility of misoperation.

In view of this, there is indeed a need to provide an outdoor garden working vehicle to overcome the defects existing in the prior art.

### SUMMARY

In view of the deficiencies of the prior art, an objective of the present disclosure is to provide an outdoor garden working vehicle that allows a user to continue depressing a brake pedal after a friction pad has moved into full abutment with a brake disc, so that the user does not experience a "too hard" brake feel.

The technical solution adopted by the present disclosure to solve the problems of the prior art is an outdoor garden working vehicle, including:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a mowing mechanism disposed at a lower portion of the frame for cutting vegetation on the ground;
a power supply unit electrically connected to the left drive motor, the right drive motor, and the mowing mechanism, and configured to supply power to the left drive motor, the right drive motor, and the mowing mechanism; and
a braking module, including:
   a parking and service brake assembly and a foot brake pump, wherein the parking and service brake assembly includes a foot pedal assembly, the foot pedal assembly is hinged to the frame and forming a lever with the foot brake pump, wherein depression of the foot pedal assembly by a user actuates the foot brake pump to generate a braking force on the left drive axle assembly and the right drive axle assembly.

In some embodiments, the foot pedal assembly and the foot brake pump form a mechanical advantage lever, and when the user depresses the foot pedal assembly, a ratio of an input moment arm to an output moment arm of the mechanical advantage lever is 1-20:1.

In some embodiments, the braking module further includes: a hydraulic tube, a left brake component, and a right brake component. Upon depression of the foot pedal assembly by the user, the foot brake pump is actuated to exert braking pressure upon the left brake component and the right brake component simultaneously via the hydraulic tube, and each of the left brake component and the right brake component applies a braking force on to a corresponding drive axle assembly of the left drive axle assembly and the right drive axle assembly, thereby braking the left drive wheel and the right drive wheel; wherein a depressing force applied by the user to the foot pedal assembly to achieve braking is 20 N to 500 N.

In some embodiments, the depressing force applied by the user to the foot pedal assembly to achieve braking is 30 N to 200 N.

In some embodiments, the left drive axle assembly and the right drive axle assembly each employ a two-or-more-stage gear reducer, the gear reducer including an input shaft, an output shaft, and an intermediate shaft. Each of the left brake component and the right brake component is disposed on a non-output shaft of the gear reducer of the corresponding drive axle assembly.

In some embodiments, each of the left brake component and the right brake component is disposed on the intermediate shaft of the gear reducer of the corresponding drive axle assembly.

In some embodiments, the left brake component and the right brake component each include a brake caliper mounted on the corresponding drive axle assembly, and a brake disc fixedly connected to the shaft on which the left brake component or the right brake component is disposed; when the user depresses the foot pedal assembly, the brake caliper presses against the brake disc to generate a braking force.

In some embodiments, the brake caliper of each of the left brake component and the right brake component includes a caliper hydraulic cylinder, a caliper piston rod, and a friction pad; when the foot brake pump supplies braking pressure to the caliper hydraulic cylinder via the hydraulic tube, the caliper piston rod causes the friction pad to press against the brake disc to generate a braking force.

In some embodiments, the brake caliper has a single cylinder bore, the caliper hydraulic cylinder is slidably mounted to the frame or the gear reducer of the corresponding drive axle assembly, the friction pad includes a movable friction pad and a stationary friction pad, the movable friction pad being fixed to the caliper piston rod and located on one side of the brake disc, the stationary friction pad being disposed on an opposite side of the brake disc; when the foot brake pump supplies the braking pressure to the caliper hydraulic cylinder, the caliper piston rod pushes the movable friction pad and the stationary friction pad to clamp the brake disc.

In some embodiments, the brake caliper has two cylinder bores, the caliper hydraulic cylinder is slidably mounted to the frame or the gear reducer of the corresponding drive axle assembly, two friction pads are fixed to the caliper piston rod and located on opposite sides of the brake disc; when the foot brake pump supplies the braking pressure to the caliper hydraulic cylinder, the caliper piston rod pushes the two friction pads to clamp the brake disc.

In some embodiments, a floating mounting bracket is fixed to the frame or the gear reducer of the corresponding drive axle assembly, and the caliper hydraulic cylinder is slidably connected to the floating mounting bracket.

In some embodiments, the brake disc has a thickness of 2 mm to 6 mm and a diameter of 60 mm to 300 mm.

In some embodiments, the brake caliper has a hydraulic pressure range of 2 MPa to 40 MPa, and the caliper piston rod has a piston stroke of 0.5 mm to 20 mm.

In some embodiments, the foot brake pump has a cylinder rod diameter of 5 mm to 30 mm, the caliper hydraulic cylinder has a diameter of 5 mm to 40 mm, and the foot brake pump has a cylinder rod stroke of 5 mm to 100 mm.

In some embodiments, a reduction ratio between the intermediate shaft on which the left brake component or the right brake component is disposed and the corresponding output shaft of the 2-stage gear reducer ranges from 1 to 50.

In some embodiments, the left drive axle assembly and the right drive axle assembly each employ a 2-stage gear reducer, and the reduction ratio between the intermediate shaft on which the left brake component or the right brake component is disposed and the corresponding output shaft ranges from 3 to 6.

In some embodiments, the parking and service brake assembly further includes a rotating plate and a brake spring, wherein the rotating plate is rotatably connected to the frame, the foot pedal assembly is fixedly connected to the rotating plate, opposite ends of the brake spring are respectively connected to the frame and the rotating plate, and a threaded push rod is connected to the rotating plate. When the user depresses the foot pedal assembly, the rotating plate rotates and pulls the brake spring, pushing the threaded push rod to press against the foot brake pump and generate a braking force.

In some embodiments, the brake spring is a brake torsion spring, and when the user depresses the foot pedal assembly to rotate the rotating plate, one end of the brake torsion spring rotates synchronously therewith.

In some embodiments, the brake spring is a brake compression spring, and when the user depresses the foot pedal assembly, the rotating plate rotates and compresses the brake compression spring.

In some embodiments, the brake spring is a brake tension spring, and when the user depresses the foot pedal assembly, the rotating plate rotates and stretches the brake tension spring.

In some embodiments, the parking and service brake assembly further includes a fixing bracket fixedly connected to the frame, the rotating plate being rotatably connected to the fixing bracket, and the brake tension spring having opposite ends respectively connected to the fixing bracket and the rotating plate.

In some embodiments, the foot pedal assembly includes a main pedal, an auxiliary pedal, a hook plate, and a hook plate torsion spring, and a limit rod is fixedly connected to the frame; the hook plate is rotatably connected to the main pedal; when the user depresses the main pedal, the hook plate is engageable with the limit rod to place the braking module in a parking state; the hook plate torsion spring is disposed on a rotation shaft of the hook plate for applying a spring force to the hook plate to maintain the hook plate engaged with the limit rod in the parking state; and the auxiliary pedal is movably connected to the main pedal, and when the user depresses the auxiliary pedal, the hook plate is disengageable from the limit rod.

In some embodiments, a holding force provided by the hook plate torsion spring to maintain contact between the hook plate and the limit rod is 5 N to 30 N.

In some embodiments, the holding force provided by the hook plate torsion spring to maintain contact between the hook plate and the limit rod is 7 N.

In some embodiments, the main pedal and the auxiliary pedal are configured to be depressed simultaneously or separately with a single foot.

In some embodiments, when the user depresses the main pedal, at least one of two surfaces that first contact each other between the hook plate and the limit rod is curved, and depression of the main pedal by the user causes the hook plate to abut against the limit rod to rotate the hook plate, until an inner side of the hook plate passes around the limit rod and engages with the limit rod.

In some embodiments, upon depression of the auxiliary pedal by the user, the auxiliary pedal moves and presses against the hook plate, causing the hook plate to rotate away from the limit rod and disengage from the limit rod.

In some embodiments, a maximum rotation angle through which the hook plate shifts from an engaged state with the limit rod to a disengaged state from the limit rod upon the depression of the auxiliary pedal ranges from 5° to 30°.

In some embodiments, the auxiliary pedal is rotatably connected to the main pedal, and a rotation angle of the auxiliary pedal upon the depression of the auxiliary pedal by the user ranges from 0° to 90°.

In some embodiments, an auxiliary pedal torsion spring is disposed at a hinge between the auxiliary pedal and the main pedal, the auxiliary pedal torsion spring biasing the auxiliary pedal to remain in a non-pressing state relative to the hook plate when not depressed.

In some embodiments, a depressing force applied by the user to the auxiliary pedal to disengage the hook plate from the limit rod ranges from 3 N to 100 N.

In some embodiments, the outdoor garden working vehicle further includes a recognition module, a control system, and a reminder module. The recognition module is configured to detect whether the main pedal is depressed. The control system includes a vehicle control module, a motor control module, and a battery management module. The vehicle control module, the motor control module, and the battery management module are communicatively coupled with one another. The battery management module is communicatively coupled with the power supply unit; the motor control module is communicatively coupled with the left drive motor and the right drive motor. Upon that the recognition module detects that the main pedal is depressed, the control system is configured to control the left drive motor and the right drive motor to stop rotating, and sends a braking state reminder to the user via the reminder module.

In some embodiments, the recognition module includes a micro switch disposed on the frame, and a switch pressing plate is fixed to the rotating plate. When the main pedal is in a naturally released state, the switch pressing plate presses the micro switch. When the user depresses the main pedal to rotate the rotating plate, the switch pressing plate moves out of contact with the micro switch, whereupon the micro switch triggers the left drive motor and the right drive motor to stop rotating.

In some embodiments, a switch box is fixedly disposed on the fixing bracket, and the micro switch and the switch pressing plate are both mounted in the switch box.

In some embodiments, a hydraulic brake force damping adjustment mechanism is provided at the foot brake pump for allowing the foot pedal assembly to be further depressed and moved after hydraulic oil inside the foot brake pump has been compressed to a limit.

In some embodiments, the hydraulic brake force damping adjustment mechanism includes an oil pump bracket and a damping member, the oil pump bracket being fixed to the frame, the damping member connecting the foot brake pump and the oil pump bracket.

In some embodiments, the hydraulic brake force damping adjustment mechanism further includes a guide member connected to the foot brake pump, the guide member being configured to restrict the foot brake pump to reciprocating motion only in a direction of being pressed by the foot pedal assembly.

In some embodiments, the damping member is a damping compression spring, the guide member is a bolt, the bolt sequentially passes through the foot brake pump and the damping compression spring and is threadedly connected to the oil pump bracket.

In some embodiments, the damping member has an initial damping force after assembly.

In some embodiments, when the main pedal is in a naturally released state, the damping compression spring is in a first state; when the hook plate is engaged with the limit rod, the damping compression spring is in a second state; a compression amount of the damping compression spring in the second state is greater than that in the first state.

In some embodiments, a difference in compression amount of the damping compression spring between the second state and the first state is 1 mm to 60 mm.

The present disclosure further provides a lawn mower, including:
a frame;
a left drive axle assembly and a right drive axle assembly, wherein the left drive axle assembly is mechanically coupled between a left drive motor and a left drive wheel to transmit power from the left drive motor to the left drive wheel; and the right drive axle assembly is mechanically coupled between a right drive motor and a right drive wheel to transmit power from the right drive motor to the right drive wheel;
a mowing mechanism disposed at a lower portion of the frame for cutting ground vegetation;
a power supply unit electrically connected to the left drive motor, the right drive motor, and the mowing mechanism, and configured to supply power to the left drive motor, the right drive motor, and the mowing mechanism; and
a braking module, including:
   a parking and service brake assembly and a foot brake pump, wherein the parking and service brake assembly includes a foot pedal assembly, the foot pedal assembly is hinged to the frame and forms a lever with the foot brake pump, wherein depression of the foot pedal assembly by a user actuates the foot brake pump to generate a braking force on the left drive axle assembly and the right drive axle assembly.

The present disclosure further provides an electric outdoor garden working vehicle, including:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a working mechanism disposed at a lower portion of the frame for performing outdoor work on the ground;
a power supply unit electrically connected to the left drive motor, the right drive motor, and the working mechanism, and configured to supply power to the left drive motor, the right drive motor, and the working mechanism; and
a braking module, including:
   a parking and service brake assembly and a foot brake pump, the parking and service brake assembly includes a foot pedal assembly, the foot pedal assembly is hinged to the frame and forming a lever with the foot brake pump, wherein depression of the foot pedal assembly by a user actuates the foot brake pump to generate a braking force on the left drive axle assembly and the right drive axle assembly.

The present disclosure further provides another outdoor garden working vehicle, including:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a mowing mechanism disposed at a lower portion of the frame for cutting ground vegetation;
a power supply unit electrically connected to the left drive motor, the right drive motor, and the mowing mechanism, and configured to supply power to the left drive motor, the right drive motor, and the mowing mechanism; and
a braking module including a parking and service brake assembly, wherein depression of the parking and service brake assembly by the user generates a braking force on the left drive axle assembly and the right drive axle assembly.

The parking and service brake assembly inlcudes a foot pedal assembly, the foot pedal assembly including a main pedal and an auxiliary pedal. Depression of the main pedal by the user places the braking module into either a braking state or a parking state, and depression of the auxiliary pedal by the user releases the braking module from the parking state.

In some embodiments, the main pedal and the auxiliary pedal are configured to be depressed simultaneously or separately with a single foot.

In some embodiments, the braking module further includes a foot brake pump, and the parking and service brake assembly further includes a rotating plate and a brake tension spring. The rotating plate is rotatably connected to the frame, the foot pedal assembly is fixedly connected to the rotating plate, opposite ends of the brake tension spring are respectively connected to the frame and the rotating plate, and a threaded push rod is connected to the rotating plate. When the user depresses the foot pedal assembly, the rotating plate rotates and stretches the brake tension spring, pushing the threaded push rod to press against the foot brake pump and generate a braking force.

In some embodiments, the brake spring is a brake tension spring, and when the user depresses the foot pedal assembly, the rotating plate rotates and stretches the brake tension spring.

In some embodiments, the braking module further includes: a hydraulic tube, a left brake component, and a right brake component. Upon depression of the foot pedal assembly by the user, the foot brake pump is actuated to exert braking pressure upon the left brake component and the right brake component simultaneously via the hydraulic tube, and each of the left brake component and the right brake component applies a braking force to a corresponding drive axle assembly of, thereby braking the left drive wheel and the right drive wheel.

In some embodiments, the foot pedal assembly further includes a hook plate and a hook plate torsion spring, and a limit rod is fixedly connected to the frame. The hook plate is rotatably connected to the main pedal; when the user depresses the main pedal, the hook plate is engageable with the limit rod to place the braking module in a parking state. The hook plate torsion spring is disposed on a rotation shaft of the hook plate for applying a spring force to the hook plate to maintain the hook plate engaged with the limit rod in the parking state. The auxiliary pedal is rotatably connected to the main pedal, and when the user depresses the auxiliary pedal, the hook plate is disengageable from the limit rod.

In some embodiments, a holding force provided by the hook plate torsion spring to maintain contact between the hook plate and the limit rod is 5 N to 30 N.

In some embodiments, when the user depresses the main pedal, at least one of two surfaces that first contact each other between the hook plate and the limit rod is curved. Depression of the main pedal by the user causes the hook plate to abut against the limit rod to rotate the hook plate, until an inner side of the hook plate passes around a cylindrical surface of the limit rod and engages with the limit rod.

In some embodiments, upon depression of the auxiliary pedal by the user, the auxiliary pedal rotates and presses against the hook plate, causing the hook plate to rotate away from the limit rod and disengage from the limit rod.

In some embodiments, a maximum rotation angle through which the hook plate shifts from an engaged state with the limit rod to a disengaged state from the limit rod upon the depression of the auxiliary pedal ranges from 10° to 30°.

In some embodiments, a rotation angle of the auxiliary pedal upon the depression of the auxiliary pedal by the user ranges from 0° to 90°.

In some embodiments, an auxiliary pedal torsion spring is disposed at a hinge between the auxiliary pedal and the main pedal, the auxiliary pedal torsion spring biasing the auxiliary pedal to remain in a non-pressing state relative to the hook plate when not depressed.

In some embodiments, a depressing force applied by the user to the auxiliary pedal to disengage the hook plate from the limit rod ranges from 3 N to 100 N.

In some embodiments, the foot pedal assembly and the foot brake pump form a mechanical advantage lever; when the user depresses the foot pedal assembly, a ratio of an input moment arm to an output moment arm of the mechanical advantage lever ranges from 1-20:1, and a depressing force applied by the user to the parking and service brake assembly to achieve braking ranges from 20 N to 400 N.

In some embodiments, the depressing force applied by the user to the foot pedal assembly to achieve braking is 30 N to 200 N.

In some embodiments, the left drive axle assembly and the right drive axle assembly each employ a two-or-more-stage gear reducer, the gear reducer including an input shaft, an output shaft, and at least one intermediate shaft. Each of the left brake component and the right brake component is disposed on a non-output shaft of the gear reducer of the corresponding drive axle assembly.

In some embodiments, the left brake component and the right brake component are respectively disposed on the intermediate shaft of the corresponding gear reducer.

In some embodiments, the left brake component and the right brake component each include a brake caliper mounted on the corresponding drive axle assembly, and a brake disc fixedly connected to the shaft on which the left brake component or the right brake component is disposed. When the user depresses the parking and service brake assembly, the brake caliper presses against the brake disc to generate a braking force.

In some embodiments, the brake caliper of each of the left brake component and the right brake component includes a caliper hydraulic cylinder, a caliper piston rod, and a friction pad. When the foot brake pump supplies braking pressure to the caliper hydraulic cylinder via the hydraulic tube, the caliper piston rod causes the friction pad to press against the brake disc to generate a braking force.

In some embodiments, the brake caliper has a single cylinder bore, the caliper hydraulic cylinder is slidably mounted to the frame or the gear reducer of the corresponding drive axle assembly, the friction pad includes a movable friction pad and a stationary friction pad. The movable friction pad is fixed to the caliper piston rod and located on one side of the brake disc. The stationary friction pad is disposed on an opposite side of the brake disc. When the foot brake pump supplies the braking pressure to the caliper hydraulic cylinder, the caliper piston rod pushes the movable friction pad and the stationary friction pad to clamp the brake disc.

In some embodiments, the brake caliper has two cylinder bores, the caliper hydraulic cylinder is slidably mounted to the frame or the gear reducer of the corresponding drive axle assembly, two friction pads are fixed to the caliper piston rod and located on opposite sides of the brake disc; when the foot brake pump supplies the braking pressure to the caliper hydraulic cylinder, the caliper piston rod pushes the two friction pads to clamp the brake disc.

In some embodiments, a floating mounting bracket is fixed to the frame or the gear reducer of the corresponding drive axle assembly, and the caliper hydraulic cylinder is slidably connected to the floating mounting bracket.

In some embodiments, the brake disc has a thickness of 2 mm to 6 mm and a diameter of 60 mm to 300 mm.

In some embodiments, the brake caliper has a hydraulic pressure range of 2 MPa to 20 MPa, and the caliper piston rod has a piston stroke of 0.5 mm to 10 mm.

In some embodiments, the foot brake pump has a cylinder rod diameter of 10 mm to 30 mm, the caliper hydraulic cylinder has a diameter of 20 mm to 40 mm, and the foot brake pump has a cylinder rod stroke of 10 mm to 60 mm.

In some embodiments, a reduction ratio between the intermediate shaft on which the left brake component or the right brake component is disposed and the corresponding output shaft is 1 to 50.

In some embodiments, the left drive axle assembly and the right drive axle assembly each employ a 2-stage gear reducer, and the reduction ratio between the intermediate shaft on which the left brake component or the right brake component is disposed and the corresponding output shaft of the 2-stage gear reducer ranges from 3 to 6.

In some embodiments, the braking module further includes a micro switch for detecting whether the main pedal is depressed, and when detecting that the main pedal is depressed, the micro switch controls the left drive motor and the right drive motor to stop.

In some embodiments, the micro switch is disposed on the frame, and a switch pressing plate is fixed to the rotating plate. When the main pedal is in a naturally released state, the switch pressing plate presses the micro switch. When the user depresses the main pedal to rotate the rotating plate, the switch pressing plate moves out of contact with the micro switch, whereupon the micro switch triggers the left drive motor and the right drive motor to stop rotating.

In some embodiments, a switch box is fixedly disposed on the fixing bracket, and the micro switch and the switch pressing plate are both mounted in the switch box.

In some embodiments, a hydraulic brake force damping adjustment mechanism is provided at the foot brake pump for allowing the main pedal to be further depressed and moved after hydraulic oil inside the foot brake pump has been compressed to a limit.

In some embodiments, the hydraulic brake force damping adjustment mechanism includes an oil pump bracket, a brake compression spring, and a bolt. The oil pump bracket being fixed to the frame. The bolt sequentially passes through the foot brake pump and the brake compression spring and is threadedly connected to the oil pump bracket.

In some embodiments, the brake compression spring remains in a compressed state. When the main pedal is in a naturally released state, the brake compression spring is in a first state. When the hook plate is engaged with the limit rod, the brake compression spring is in a second state. A compression amount of the brake compression spring in the second state is greater than that in the first state.

In some embodiments, a difference in the compression amount of the brake compression spring between the second state and the first state is 1 mm to 60 mm.

In some embodiments, an adjustment nut is disposed between the threaded push rod and the rotating plate. The adjustment nut being rotatably connected to the rotating plate. The threaded push rod being threadedly connected to the adjustment nu. An end of the threaded push rod away from the adjustment nut abutting the foot brake pump.

The present disclosure further provides a ride-on lawn mower, including:
a frame;
a seat connected to the frame for a user to sit on;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a mowing mechanism disposed at a lower portion of the frame for cutting ground vegetation;
a power supply unit electrically connected to the left drive motor, the right drive motor, and the mowing mechanism, and configured to supply power to the left drive motor, the right drive motor, and the mowing mechanism; and
a braking module including a parking and service brake assembly; a user depressing the parking and service brake assembly generates a braking force on the left drive axle assembly and the right drive axle assembly.

The parking and service brake assembly includes a foot pedal assembly, the foot pedal assembly including a main pedal and an auxiliary pedal. Depression of the main pedal by the user places the braking module into either a braking state or a parking state, and depression of the auxiliary pedal by the user releases the braking module from the parking state.

The present disclosure further provides a lawn mower, including:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a working mechanism disposed at a lower portion of the frame for performing outdoor work on the ground; and
a power supply unit electrically connected to the left drive motor, the right drive motor, and the working mechanism, and configured to supply power to the left drive motor, the right drive motor, and the working mechanism; and
a braking module including a parking and service brake assembly, wherein depression of the parking and service brake assembly by the user generates a braking force on the left drive axle assembly and the right drive axle assembly.

The parking and service brake assembly includes a foot pedal assembly, the foot pedal assembly including a main pedal and an auxiliary pedal. Depression of the main pedal by the user places the braking module into either a braking state or a parking state, and depression of the auxiliary pedal by the user releases the braking module from the parking state.

The present disclosure further provides an electric outdoor garden working vehicle, including:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a working mechanism disposed at a lower portion of the frame for performing outdoor work on the ground;
a power supply unit electrically connected to the left drive motor, the right drive motor, and the working mechanism, and configured to supply power to the left drive motor, the right drive motor, and the working mechanism; and
a braking module including a parking and service brake assembly and a foot brake pump.

The parking and service brake assembly includes a foot pedal assembly, wherein when being depressed by, the foot pedal assembly presses the foot brake pump to generate a braking force on the left drive axle assembly and the right drive axle assembly.

In some embodiments, a hydraulic brake force damping adjustment mechanism is provided at the foot brake pump for allowing the foot pedal assembly to be further depressed and moved after hydraulic oil inside the foot brake pump has been compressed to a limit.

In some embodiments, the hydraulic brake force damping adjustment mechanism includes an oil pump bracket and a damping member, the oil pump bracket being fixed to the frame, the damping member connecting the foot brake pump and the oil pump bracket.

In some embodiments, the hydraulic brake force damping adjustment mechanism further includes a guide member connected to the foot brake pump, the guide member being configured to restrict the foot brake pump to reciprocating motion only in a direction of being pressed by the foot pedal assembly.

In some embodiments, the damping member is a damping compression spring, the guide member is a bolt, the bolt sequentially passes through the foot brake pump and the damping compression spring and is threadedly connected to the oil pump bracket.

In some embodiments, the damping member has an initial damping force after assembly.

In some embodiments, a limit rod is fixedly connected to the frame, the foot pedal assembly includes a main pedal, a hook plate, and a hook plate torsion spring, the hook plate being rotatably connected to the main pedal; when the user depresses the main pedal, the hook plate is engageable with the limit rod to place the braking module in a parking state; the hook plate torsion spring is disposed on a rotation shaft of the hook plate for applying a spring force to the hook plate to maintain the hook plate engaged with the limit rod in the parking state.

In some embodiments, when the user depresses the main pedal, at least one of two surfaces that first contact each other between the hook plate and the limit rod is curved, and depression of the main pedal by the user causes the hook plate to abut against the limit rod to rotate the hook plate, until an inner side of the hook plate passes around the limit rod and engages with the limit rod.

In some embodiments, a holding force provided by the hook plate torsion spring to maintain contact between the hook plate and the limit rod is 5 N to 30 N.

In some embodiments, the holding force provided by the hook plate torsion spring to maintain contact between the hook plate and the limit rod is 7 N.

In some embodiments, when the main pedal is in a naturally released state, the damping compression spring is in a first state. When the hook plate is engaged with the limit rod, the damping compression spring is in a second state; a compression amount of the brake compression spring in the second state is greater than that in the first state.

In some embodiments, when the main pedal is in a naturally released state, the damping compression spring is in a first state. When the hook plate is engaged with the limit rod, the damping compression spring is in a second state. A compression amount of the brake compression spring in the second state is greater than that in the first state. A difference in the compression amount of the damping compression spring between the second state and the first state ranges from 1 mm to 60 mm.

In some embodiments, the foot pedal assembly further includes an auxiliary pedal, and depression of the auxiliary pedal by the user causes the braking module to release the parking state.

In some embodiments, the main pedal and the auxiliary pedal are configured to be depressed simultaneously or separately with a single foot.

In some embodiments, the auxiliary pedal is movably connected to the main pedal, and upon depression of the auxiliary pedal by the user, the auxiliary pedal moves and presses against the hook plate, causing the hook plate to rotate away from the limit rod and disengage from the limit rod.

In some embodiments, when a maximum rotation angle through which the hook plate shifts from an engaged state with the limit rod to a disengaged state from the limit rod upon the depression of the auxiliary pedal ranges from 5° to 30°.

In some embodiments, the auxiliary pedal is rotatably connected to the main pedal, and a rotation angle of the auxiliary pedal upon the depression of the auxiliary pedal by the user ranges from 0° to 90°.

In some embodiments, an auxiliary pedal torsion spring is disposed at a hinge between the auxiliary pedal and the main pedal, the auxiliary pedal torsion spring biasing the auxiliary pedal to remain in a non-pressing state relative to the hook plate when not depressed.

In some embodiments, the parking and service brake assembly further includes a rotating plate and a brake spring. The rotating plate is rotatably connected to the frame. The foot pedal assembly is fixedly connected to the rotating plate. Opposite ends of the brake spring are respectively connected to the frame and the rotating plate. A threaded push rod is connected to the rotating plate. When the user depresses the foot pedal assembly, the rotating plate rotates and pulls the brake spring, pushing the threaded push rod to press against the foot brake pump and generate a braking force.

In some embodiments, the outdoor garden working vehicle further includes a recognition module, a control system, and a reminder module. The recognition module is configured to detect whether the main pedal is depressed. The control system includes a vehicle control module, a motor control module, and a battery management module. The vehicle control module, the motor control module, and the battery management module are communicatively coupled with one another. The battery management module is communicatively coupled with the power supply unit. The motor control module is communicatively coupled with the left drive motor and the right drive motor. Upon that the recognition module detects that the main pedal is depressed, the control system is configured to control the left drive motor and the right drive motor to stop rotating, and sends a braking state reminder to the user via the reminder module.

In some embodiments, the recognition module includes a micro switch disposed on the frame, and a switch pressing plate is fixed to the rotating plate. When the main pedal is in a naturally released state, the switch pressing plate presses the micro switch. When the user depresses the main pedal to rotate the rotating plate, the switch pressing plate moves out of contact with the micro switch, whereupon the micro switch triggers the left drive motor and the right drive motor to stop rotating.

The present disclosure further provides a ride-on outdoor garden working vehicle, including:
a frame;
a seat connected to the frame for a user to sit on;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a working mechanism disposed at a lower portion of the frame for performing outdoor work on the ground;
a power supply unit electrically connected to the left drive motor, the right drive motor, and the working mechanism, and configured to supply power to the left drive motor, the right drive motor, and the working mechanism; and
a braking module including a parking and service brake assembly, wherein depression of the parking and service brake assembly by the user generates a braking force on the left drive axle assembly and the right drive axle assembly.

The parking and service brake assembly includes a foot pedal assembly, the foot pedal assembly including a main pedal and an auxiliary pedal. Depression of the main pedal by the user places the braking module into either a braking state or a parking state, and depression of the auxiliary pedal by the user releases the braking module from the parking state.

The present disclosure further provides a zero-turn lawn mower, including:
a frame;
a drive axle assembly including a left drive axle assembly and a right drive axle assembly, wherein each drive axle assembly of the left drive axle assembly and the right drive axle assembly is mechanically coupled between a drive motor and a drive wheel on a corresponding side to transmit power from the drive motor to the drive wheel;
a mowing mechanism disposed at a lower portion of the frame for cutting ground vegetation;
a power supply unit electrically connected to the drive motor of each drive axle assembly and the mowing mechanism, and configured to supply power to the drive motors and the mowing mechanism;

Each drive axle assembly includes a housing and a plurality of shafts.

At least one of the shafts is connected to a neutral mechanism. The neutral mechanism is configured to be controlled to place the drive axle assembly in a neutral state or an engaged state. The drive axle assembly is configured to, transmit power from the drive motor to the drive wheel in the engaged state, and stop transmitting power from the drive motor to the drive wheel in the neutral state.

The plurality of shafts include:
an input shaft mechanically coupled to the drive motor, the drive motor rotating the input shaft; and
an output shaft coupled between the input shaft and the drive wheel, for outputting power from the drive motor to the drive wheel.

In some embodiments, the zero-turn lawn mower further includes a recognition module, a control system, and a reminder module. The recognition module is configured to recognize whether the drive axle assembly is in the neutral state. The control system includes a vehicle control module, a motor control module, and a battery management module. The vehicle control module, the motor control module, and the battery management module are communicatively coupled with one another. The battery management module is communicatively coupled with the power supply unit. The motor control module is communicatively coupled with the drive motor. Upon detecting that the drive axle assembly is in the neutral state, the recognition module is configured to send a neutral state reminder to the user via the reminder module.

In some embodiments, the neutral mechanism includes an operating portion and an action portion connected to each other. The action portion is configured to, under action of the operating portion, place the drive axle assembly in the neutral state or the engaged state.

In some embodiments, a sliding gear is disposed on the shaft on which the neutral mechanism is provided. The sliding gear is configured to transmit torque and slide along the shaft. A fixing gear is disposed on another shaft adjacent to the shaft on which the neutral mechanism is provided. The operating portion is configured to be controlled to drive the sliding gear to slide along its shaft to engage or disengage the sliding gear with the fixing gear. The drive axle assembly is in the engaged state when the sliding gear and the fixing gear are engaged, and the drive axle assembly is in the neutral state when the sliding gear and the fixing gear are disengaged.

In some embodiments, the sliding gear is in splined engagement with its respective shaft.

In some embodiments, an inner bore of the sliding gear is provided with an internal spline, and the shaft, on which the sliding gear is slidably connected, is provided with an external spline mating with the internal spline. Axial sliding of the sliding gear along the external spline enables the drive axle assembly to be switched between the engaged state and the neutral state.

In some embodiments, the action portion includes a neutral shifting member, and sliding of the neutral shifting member along the respective shaft drives the sliding gear to slide to switch the drive axle assembly to between the engaged state and the neutral state.

In some embodiments, a groove is formed circumferentially in the sliding gear, and one end of the neutral shifting member is engaged in the groove.

In some embodiments, a sliding rod is connected to the neutral shifting member, the sliding rod being slidably connected to the housing.

In some embodiments, the operating portion includes the sliding rod, the sliding rod extends through a side wall of the housing and is connected to a pull rod located outside the housing, and the pull rod is provided with a handle for manual grasping.

In some embodiments, the handle is located, in a horizontal direction, within an area inside an outer end surface of the housing, and, in a vertical direction, within an area below a center plane of the housing.

In some embodiments, a spring is sleeved on the sliding rod, opposite ends of the spring being respectively connected to the housing and the sliding rod, and the spring biases the sliding rod with a spring force tending to move the sliding rod to a state where the drive axle assembly is in the neutral state or the engaged state.

In some embodiments, a limiting plate connected to the handle is fixedly connected to an exterior of the housing, the limiting plate being configured to limit the handle to place the drive axle assembly in the neutral state or the engaged state.

In some embodiments, the limiting plate has two limiting grooves. The drive axle assembly is configured to be in the neutral state when the handle is engaged in one of the limiting grooves. The drive axle assembly is configured to be in the engaged state when the handle is engaged in the other limiting groove.

In some embodiments, the limiting plate is provided with a slide channel connecting the two limiting grooves, the handle being slidable along the slide channel between one limiting groove and the other limiting groove. The limiting plate is provided with a retaining member to prevent the handle from disengaging from the limiting groove due to vibration. The retaining member includes a limiting protrusion provided on a side wall of the limiting groove. The handle, when in the limiting groove, is prevented from directly sliding into the slide channel by the combined action of the spring and the limiting protrusion.

In some embodiments, the plurality of shafts further includes an intermediate shaft disposed between the input shaft and the output shaft. The intermediate shaft is configured to transmit power from the input shaft to the output shaft; the sliding gear is disposed on the input shaft, and the fixing gear is disposed on the intermediate shaft adjacent to the input shaft.

In some embodiments, the operating portion includes a hand brake and a hand brake cable, the hand brake cable being connected to the sliding rod. Operating the hand brake to move the hand brake cable causes the sliding rod to move, thereby switching the drive axle assembly between the neutral state and the engaged state.

In some embodiments, the operating portion includes a control switch and an electric linear actuator. The electric linear actuator is connected to the sliding rod, and manipulating the control switch causes the electric linear actuator to operate and drive the sliding rod to move, thereby switching the drive axle assembly between the neutral state and the engaged state.

In some embodiments, the operating portion includes a control switch, the action portion includes an electromagnetic clutch. The shaft on which the electromagnetic clutch is provided is divided into a front shaft portion and a rear shaft portion arranged coaxially. The electromagnetic clutch includes two synchronizers respectively disposed on the front shaft portion and the rear shaft portion. The control switch can control the two synchronizers to abut against each other or be separated from each other. When the two synchronizers abut against each other, power is transmitted between the front shaft portion and the rear shaft portion, and the drive axle assembly is in the engaged state. When the two synchronizers are separated from each other, power transmission is interrupted between the front shaft portion and the rear shaft portion, and the drive axle assembly is in the neutral state.

The present disclosure further provides an outdoor garden working vehicle, including:
a frame;
a drive axle assembly including a left drive axle assembly and a right drive axle assembly, wherein each drive axle assembly of the left drive axle assembly and the right drive axle assembly is mechanically coupled between a drive motor and a drive wheel on a corresponding side to transmit power from the drive motor to the drive wheel;
a working mechanism disposed at a lower portion of the frame for performing outdoor work on the ground;
a power supply unit electrically connected to the drive motor of each drive axle assembly and the working mechanism, and configured to supply power to the drive motors and the working mechanism.

Each drive axle assembly includes a housing and a plurality of shafts.

At least one of the shafts is connected to a neutral mechanism. The neutral mechanism is configured to be controlled to place the drive axle assembly in a neutral state or an engaged state. The drive axle assembly is configured to transmit power from the drive motor to the drive wheel in the engaged state, and to stop transmitting power from the drive motor to the drive wheel in the neutral state.

The plurality of shafts includes:
an input shaft mechanically coupled to the drive motor, the drive motor rotating the input shaft; and
an output shaft coupled between the input shaft and the drive wheel, for outputting power from the drive motor to the drive wheel.

The present disclosure further provides a ride-on outdoor garden working vehicle, including:
a frame;
a seat connected to the frame for a user to sit on;
a drive axle assembly including a left drive axle assembly and a right drive axle assembly, wherein each drive axle assembly of the left drive axle assembly and the right drive axle assembly is mechanically coupled between a drive motor and a drive wheel on a corresponding side to transmit power from the drive motor to the drive wheel;
a working mechanism disposed at a lower portion of the frame for performing outdoor work on the ground;
a power supply unit electrically connected to the drive motor of each drive axle assembly and the working mechanism, and configured to supply power to the drive motors and the working mechanism.

The drive axle assembly includes a housing and a plurality of shafts.

At least one of the shafts is connected to a neutral mechanism. The neutral mechanism is configured to be controlled to place the drive axle assembly in a neutral state or an engaged state. The drive axle assembly is configured to transmit power from the drive motor to the drive wheel in the engaged state, and to stop transmitting power from the drive motor to the drive wheel in the neutral state.
the plurality of shafts includes:
an input shaft mechanically coupled to the drive motor, the drive motor rotating the input shaft; and
an output shaft coupled between the input shaft and the drive wheel, for outputting power from the drive motor to the drive wheel.

Compared with the prior art, the present disclosure has the following beneficial effects. By configuring the connection between the foot pedal assembly and the foot brake pump as a mechanical advantage lever and disposing the brake disc on a non-output shaft of the gear reducer, the reduction ratio of the gear reducer allows a user to generate sufficient braking force without applying an excessively large force to depress the foot pedal assembly, thereby solving the technical problem in the prior art that a very large force is required to achieve effective braking.

In the present disclosure, depressing the main pedal achieves braking, and further depressing the main pedal with greater force achieves parking, so that switching between braking and parking modes is more consistent with user operating habits. When the parking mode needs to be released, the user only needs to depress the auxiliary pedal, which is integrated on one side of the main pedal, allowing the user to complete braking, parking, and parking release operations with a single foot, making the overall operation convenient.

In addition, in the present disclosure, the foot brake pump is floatingly mounted to the frame via a hydraulic brake force damping adjustment mechanism. When the user depresses the foot pedal assembly such that the friction pad of the brake component is fully in abutment with the brake disc, the foot pedal assembly can still be further depressed by the user for a certain distance, so that the user does not experience a "too hard" brake feel during the entire depression process of the foot pedal assembly. Moreover, the damping member in the hydraulic brake force damping adjustment mechanism has an initial damping force after assembly, such that a pedal rebound force experienced by the user during the entire depression process of the foot pedal assembly gradually increases without any interval where the rebound force increases significantly, thereby improving the user's overall braking experience.

### BRIEF DESCRIPTION OF DRAWINGS

Specific embodiments of the present disclosure are described in detail below in conjunction with the accompanying drawings.
FIG. 1 is a perspective view of an outdoor garden working vehicle according to some embodiments of the present disclosure.
FIG. 2 is an exploded view of a braking module and drive axle of FIG. 1.
FIG. 3 is a perspective view of a foot pedal assembly and a foot brake pump of FIG. 2.
FIG. 4 is an exploded view of the foot pedal assembly and the foot brake pump of FIG. 2.
FIG. 5 is an exploded view of the foot pedal assembly of FIG. 2.
FIG. 6 is a perspective view of a brake caliper according to some embodiments of the present disclosure.
FIG. 7 is a perspective view of the brake caliper with a friction pad separated therefrom according to some embodiments of the present disclosure.
FIG. 8 is a schematic diagram of a recognition module and a control system according to some embodiments of the present disclosure.
FIG. 9 is a perspective view of a zero-turn lawn mower according to some embodiments of the present disclosure.
FIG. 10 is an exploded view of a drive axle assembly portion of FIG. 9.
FIG. 11 is a perspective view of a limiting plate portion shown in FIG. 10 from one viewing angle.
FIG. 12 is a perspective view of the limiting plate portion shown in FIG. 10 from another viewing angle.
FIG. 13 is an exploded view of the limiting plate portion shown in FIG. 10.
FIG. 14 is a schematic diagram of a recognition module and a control system according to some embodiments of the present disclosure.
FIG. 15 is a schematic diagram of an operating portion using a hand brake and a hand brake cable according to some embodiments of the present disclosure.
FIG. 16 is a schematic diagram of an operating portion using a control switch and an electric linear actuator according to some embodiments of the present disclosure.
FIG. 17 is a schematic diagram of an action portion using an electromagnetic clutch according to some embodiments of the present disclosure.

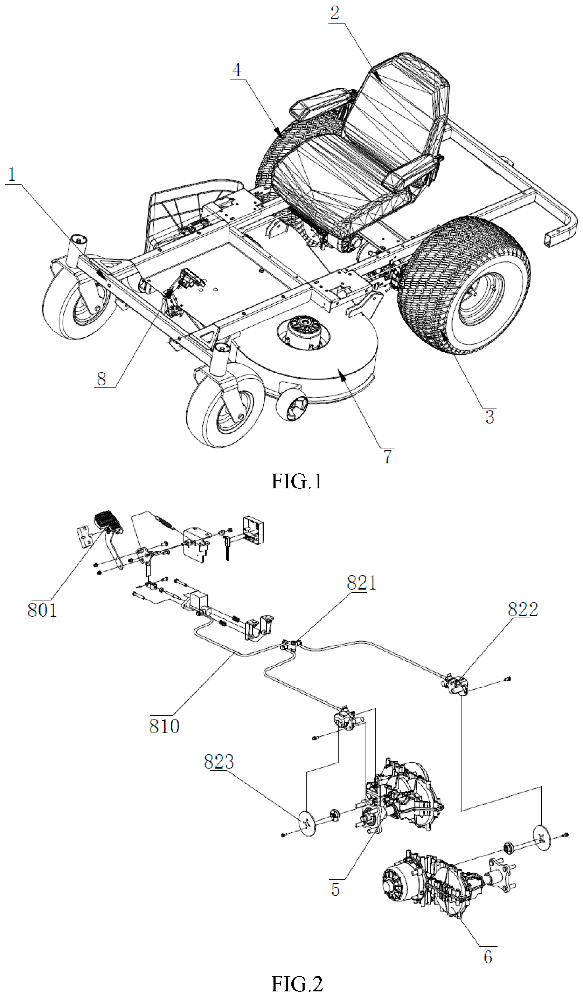

### Reference numerals in figs. 1-8:

1: frame; 2: user seat; 3: left drive wheel; 4: right drive wheel; 5: left drive axle assembly; 6: right drive axle assembly; 7: mowing mechanism; 8: braking module; 801: main pedal; 802: auxiliary pedal; 803: auxiliary pedal torsion spring; 804: hook plate; 805: hook plate torsion spring; 806: limit rod; 807: rotating plate; 808: brake spring; 809: fixing bracket; 810: hydraulic tube; 811: foot brake pump; 812: threaded push rod; 813: oil pump bracket; 814: bolt; 815: damping compression spring; 816: connection plate; 817: adjustment nut; 818: micro switch; 819: switch pressing plate; 820: switch box; 821: three-way valve block; 822: brake caliper; 8221: caliper hydraulic cylinder; 8222: friction pad; 8223: caliper piston rod; 823: brake disc; 824: floating mounting bracket.

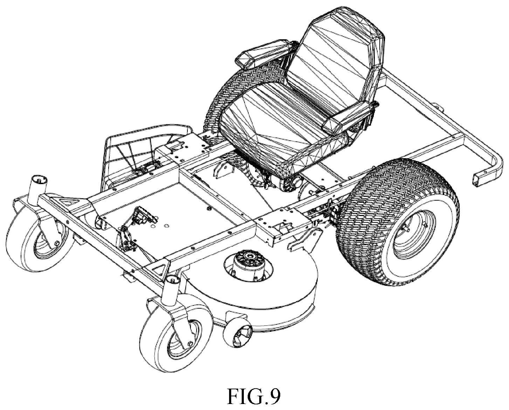

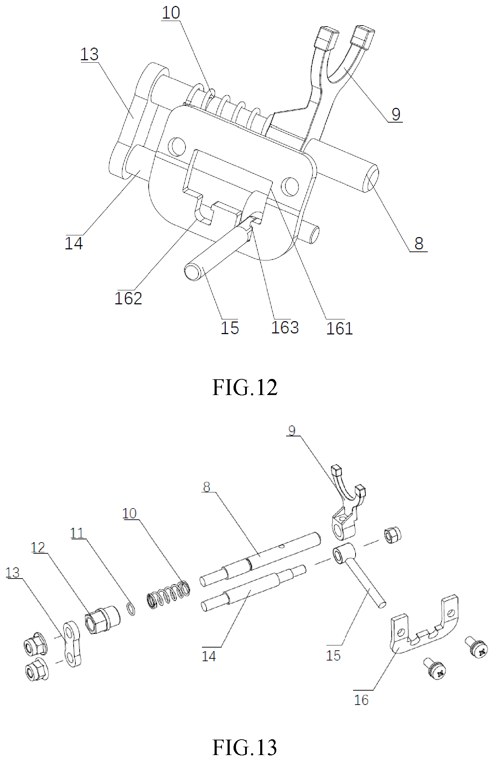

### Reference numerals in figs. 9-17:

1: drive motor; 2: sliding gear; 3: input shaft; 4: intermediate shaft; 5: output shaft; 6: upper housing; 7: lower housing; 8: sliding rod; 9: neutral shifting fork; 10: spring; 11: O-ring; 12: screw plug; 13: connection plate; 14: pull rod; 15: handle; 16: limiting plate; 161: slide channel; 162: limiting groove; 163: limiting protrusion; 17: hand brake; 18: control switch; 19: electric linear actuator; 20: electromagnetic clutch; 21: synchronizer.

### DETAILED DESCRIPTION OF PREFERRED EMBODIMENTS

The terminology used in the present disclosure is merely for describing particular embodiments and is not intended to limit the present disclosure. For example, words such as "upper," "lower," "front," and "rear" that indicate orientation or positional relationships are based solely on the orientations or positional relationships shown in the drawings, and are merely for the convenience of describing the present disclosure and simplifying the description. They are not intended to indicate or imply that the device or element in question must have a particular orientation, or be constructed or operated in a particular orientation, and thus should not be construed as limiting the present disclosure.

Unless otherwise specified, the terms "disposed," "connected," and "coupled" as used in the present disclosure should be interpreted in a broad sense. For example, the connection may be a fixed connection, a detachable connection, or an integral connection; or may be a direct connection or an indirect connection through an intermediate medium. The term "fixedly connected" as used in the present disclosure should also be interpreted broadly as integrally formed, welded, or connected by other fasteners.

Referring to FIGS. 1 to 8, an outdoor garden working vehicle according to some embodiments of the present disclosure is shown, including: a frame 1, a left drive axle assembly 5, a right drive axle assembly 6, a mowing mechanism 7, a power supply unit, and a braking module.

The left drive axle assembly 5 is mechanically coupled between a left drive motor and a left drive wheel 3 to transmit power from the left drive motor to the left drive wheel 3. The right drive axle assembly 6 is mechanically coupled between a right drive motor and a right drive wheel 4 to transmit power from the right drive motor to the right drive wheel 4. The mowing mechanism 7 is disposed at a lower portion of the frame 1 for cutting vegetation on the ground. Specifically, the left drive wheel 3 and right drive wheel 4 are disposed at a rear portion of the mowing mechanism 7. It should be particularly noted that the mowing mechanism 7 should not be narrowly interpreted as a mechanism capable only of mowing grass; it may also be replaced with other functional attachments, such as snowplow or snow blower attachments. A person skilled in the art may adaptively replace the mowing mechanism 7 with various functional attachments without creative effort, and all such replacements should fall within the protection scope of the present disclosure.

The power supply unit is electrically connected to the left drive motor, the right drive motor, and the mowing mechanism 7, for supplying power to the left drive motor, the right drive motor, and the mowing mechanism 7. In the present embodiment, the power supply unit is a battery pack. In other embodiments, a combination of an internal combustion engine and a battery may be used. In such a configuration, the internal combustion engine burns fuel to generate electricity via a generator to charge the battery, and the battery then supplies power to various components of the lawn mower.

Referring to FIG. 2, the braking module of the present embodiment includes a parking and service brake assembly and a foot brake pump 811. The parking and service brake assembly includes a foot pedal assembly. The foot pedal assembly is hinged to the frame 1 and forms a lever with the foot brake pump 811. Depression of the foot pedal assembly by a user actuates the foot brake pump 811 to generate a braking force on the left drive axle assembly 5 and the right drive axle assembly 6. In the present embodiment, the foot pedal assembly and the foot brake pump 811 form a mechanical advantage lever. When the user depresses the foot pedal assembly, a ratio of an input moment arm (also referred to as lever arm or force arm) to an output moment arm of the mechanical advantage lever is 1-20:1, allowing the user to depress the foot pedal assembly with relatively reduced effort.

Referring to FIG. 2, the braking module further includes a hydraulic tube 810, a left brake component, and a right brake component. The hydraulic tube 810 connects the foot brake pump 811, the left brake component, and the right brake component. To effectively connect the above components, a three-way valve block 821 is generally provided. Upon depression of the foot pedal assembly by the user, the foot brake pump 811 is actuated to generate a braking pressure. The braking pressure is simultaneously conveyed to the left brake component and the right brake component via the hydraulic tube 810, and each of the left brake component and the right brake component applies a braking force to a corresponding drive axle assembly of the left drive axle assembly 5 and the right drive axle assembly 6, thereby braking the left drive wheel 3 and the right drive wheel 4. A depressing force applied by the user to the foot pedal assembly to achieve braking ranges from 20 Newton (N) to 500 N.

In some embodiments, the depressing force applied by the user to the foot pedal assembly to achieve braking ranges from 30 N to 200 N. That is, different braking performance is achievable with an applied depression force falling within the range of 30 N to 200 N.

The left drive axle assembly 5 and the right drive axle assembly 6 each employ a two-or-more-stage gear reducer. The gear reducer includes an input shaft, an output shaft, and an intermediate shaft. Each of the left brake component and the right brake component is disposed on a non-output shaft of the gear reducer of the corresponding drive axle assembly. The braking force of the present embodiment is derived from the user's depression. Disposing the brake components on the output shaft (i.e., a drive wheel axle) would result in an overly hard brake. In this way, excessive force would be required to generate a sufficient braking force, rendering effective pedal-initiated braking impractical. Therefore, the brake components are generally not disposed on the output shaft.

In the present embodiment, each of the left brake component and the right brake component is disposed on the intermediate shaft of the gear reducer of the corresponding drive axle assembly. There is a certain transmission ratio relationship between the input shaft, the intermediate shaft, and the output shaft. In some other embodiments, each of the brake components may be disposed on the input shafts of the gear reducer of the corresponding drive axle assembly. However, such a configuration would result in excessive brake sensitivity. That is, a slight depression of the foot pedal assembly may generate excessive braking force, which may result in sudden braking, making it difficult for the user to accurately control the depressing force when gradual deceleration is desired.

Since the drive axle assembly may employ a multi-stage gear reducer, a reduction ratio between the intermediate shaft on which the left brake component or the right brake component is disposed and the corresponding output shaft ranges from 1 to 50. In the present embodiment, the left drive axle assembly 5 and the right drive axle assembly 6 each employ a 2-stage gear reducer, and the reduction ratio between the intermediate shaft on which the left brake component or the right brake component is disposed and the corresponding output shaft ranges from 3 to 6. Since the outdoor garden working vehicle of the present embodiment is provided with a mowing mechanism 7 and is mainly used for lawn maintenance, the curb weight of a typical residential garden working vehicle is approximately 200 kilograms (kg) to 300 kg, and the curb weight of a commercial garden working vehicle is approximately 500 kg to 800 kg. Per calculation, if the brake disc 823 is disposed on the output shaft, the required braking torque would satisfy T≥150 Nm, which is relatively strenuous for an average user. In the present embodiment, the 2-stage gear reducer allows the required braking torque, when the brake is disposed on the intermediate shaft, to satisfy 30 Nm≤T≤100 Nm, yielding a reasonably modulated pedal load conducive to precise depression control.

It is particularly noted that in some other embodiments, if the mowing mechanism 7 is replaced with a functional attachment having a greater weight, resulting in a significant increase in the overall vehicle weight, to reduce force required for depressing the foot pedal assembly, the brake components may be disposed on the corresponding input shafts, respectively, or a gear reducer with a larger reduction ratio may be used with the brake component being disposed on an intermediate shaft close to the input shaft.

Each of the left brake component and the right brake component includes a brake caliper 822 mounted on the corresponding drive axle assembly. The brake caliper 822 includes a caliper hydraulic cylinder 8221, a caliper piston rod 8223, and a friction pad 8222. A brake disc 823 is fixedly connected to a shaft on which the left brake component or the right brake component is disposed. When the user depresses the foot pedal assembly, the brake caliper 822 presses against the brake disc 823 to generate a braking force. In this process, the foot brake pump 811 is connected to the caliper hydraulic cylinder 8221 via the hydraulic tube 810 and supplies braking pressure, and the caliper piston rod 8223 moves relative to the caliper hydraulic cylinder 8221 to drive the friction pad to move and press against the brake disc 823 to generate the braking force.

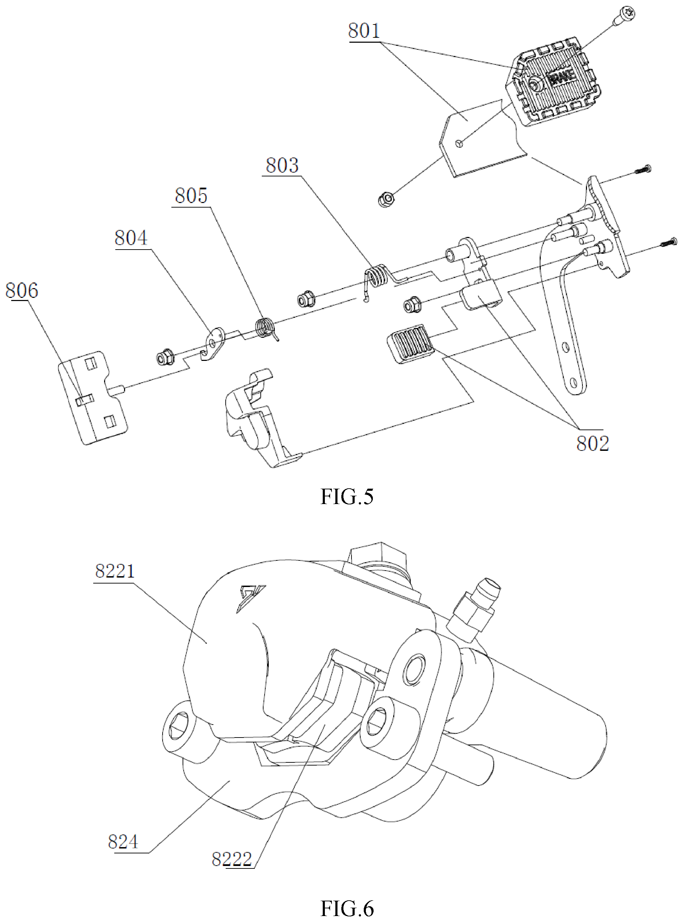

Referring to FIGS. 6 to 7, the brake caliper 822 of each of the left brake component and the right brake component in the present embodiment has a single cylinder bore, meaning that the brake component includes a caliper hydraulic cylinder 8221 only on one side of the brake disc 823. Generally, each brake component includes only one caliper hydraulic cylinder 8221 and one caliper piston rod 8223, and the caliper hydraulic cylinder 8221 is slidably mounted to the frame 1 or the corresponding gear reducer. The friction pad 8222 includes a movable friction pad and a stationary friction pad. The movable friction pad is fixed to the caliper piston rod 8223 and located on one side of the brake disc 823, and the stationary friction pad is disposed on the opposite side of the brake disc 823. When the foot brake pump 811 supplies braking pressure to the caliper hydraulic cylinder 8221, the caliper piston rod 8223 pushes the movable friction pad and the stationary friction pad to clamp the brake disc 823. In this process, the movable friction pad first contacts the brake disc 823, and then the caliper piston rod 8223 continues to move, causing the stationary friction pad to move toward the brake disc 823 until both of the friction pads 8222 contact the brake disc 823 and generate a braking force.

In some other embodiments, the brake caliper 822 of each of the left brake component and the right brake component may have two cylinder bores, meaning that the brake component includes caliper hydraulic cylinders 8221 respectively on both sides of the brake disc 823. Generally, each brake component includes two caliper hydraulic cylinders 8221 respectively located on opposite sides of the brake disc 823, and two friction pads 8222 are fixed to the caliper piston rods 8223 and located on opposite sides of the brake disc 823. When the foot brake pump 811 supplies braking pressure to the caliper hydraulic cylinders 8221, the caliper piston rods 8223 push the two friction pads to clamp the brake disc 823. It is particularly noted that if the positions of the two caliper hydraulic cylinders 8221 are fixed, the positions of the caliper hydraulic cylinders 8221 need to be precisely adjusted to maintain the distances from the two friction pads 8222 to the brake disc 823 equal; otherwise, the friction pad on one side of the brake disc 823 may not effectively abut against the brake disc 823, resulting in unsatisfactory deceleration performance. To address this problem, the caliper hydraulic cylinders 8221 are generally slidably mounted to the frame 1 or the corresponding gear reducer, thereby eliminates the need for precise adjustment of the positions of the caliper hydraulic cylinders 8221.

A floating mounting bracket 824 is fixed to the frame 1 or the corresponding gear reducer, and the caliper hydraulic cylinder 8221 is slidably connected to the floating mounting bracket 824, so as to achieve a floating mounting of the caliper hydraulic cylinder 8221 on the frame 1.

The brake disc 823 has a thickness of 2 millimeter (mm) to 6 mm and a diameter of 60 mm to 300 mm. The brake caliper 822 has a hydraulic pressure range of 2 megapascal (MPa) to 40 MPa, and the caliper piston rod 8223 has a piston stroke of 0.5 mm to 20 mm. The foot brake pump 811 has a cylinder rod diameter of 5 mm to 30 mm, the caliper hydraulic cylinder 8221 has a diameter of 5 mm to 40 mm, and the foot brake pump 811 has a cylinder rod stroke of 5 mm to 100 mm. The components with reasonable dimensions together achieve an effective braking effect. In some embodiments, the foot brake pump 811 has a cylinder rod stroke of 10 mm to 60 mm.

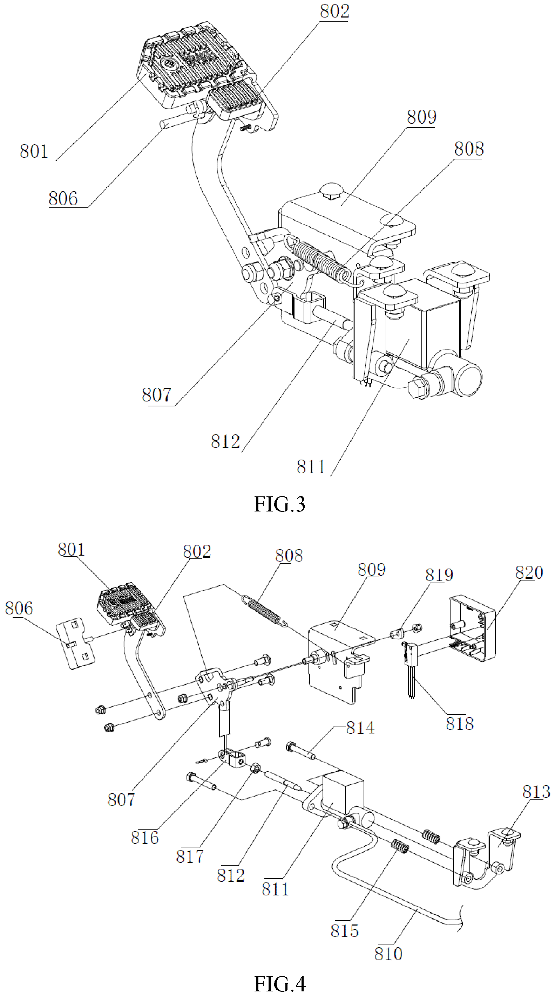

Referring to FIGS. 3 to 4, the parking and service brake assembly further includes a rotating plate 807 and a brake spring 808. The rotating plate 807 is rotatably connected to the frame 1. The foot pedal assembly is fixedly connected to the rotating plate 807. Two opposite ends of the brake spring 808 are respectively connected to the frame 1 and the rotating plate 807. A threaded push rod 812 is connected to the rotating plate 807. When the user depresses the foot pedal assembly, the rotating plate 807 rotates and pulls the brake spring 808 to push the threaded push rod 812 to press against the foot brake pump 811 and generate a braking force. In the present embodiment, the brake spring 808 is a brake tension spring. When the user depresses the foot pedal assembly, the rotating plate 807 rotates and stretches the brake tension spring, and the brake tension spring provides a pulling force to restore the foot pedal assembly.

In some other embodiments, the brake spring 808 may also be a brake torsion spring or a brake compression spring. When the brake torsion spring is used, when the user depresses the foot pedal assembly to rotate the rotating plate 807, one end of the brake torsion spring rotates synchronously therewith. When the brake compression spring is used, when the user depresses the foot pedal assembly, the rotating plate 807 rotates and compresses the brake compression spring.

To facilitate the arrangement of the brake spring 808, the parking and service brake assembly of the present embodiment further includes a fixing bracket 809 fixedly connected to the frame 1. The rotating plate 807 is rotatably connected to the fixing bracket 809. Two opposite ends of the brake tension spring are respectively connected to the fixing bracket 809 and the rotating plate 807.

Referring to FIGS. 2 to 5, the foot pedal assembly includes a main pedal 801, an auxiliary pedal 802, a hook plate 804, and a hook plate torsion spring 805. A limit rod 806 is fixedly connected to the frame 1. The hook plate 804 is rotatably connected to the main pedal 801. When the user depresses the main pedal 801, the hook plate 804 is engageable with the limit rod 806 to place the braking module in a parking state. In the parking state, the braking module can continuously provide a relatively large braking force, and when the user releases the foot pedal assembly in this state, the state of the braking module does not change, and the entire vehicle remains in place under the braking force. The hook plate torsion spring 805 is disposed on a rotation shaft of the hook plate 804 and is configured to apply a spring force to the hook plate 804 to maintain the hook plate 804 engaged with the limit rod 806 in the parking state, so as to prevent the hook plate 804 from disengaging from the limit rod 806 due to slight vibrations. A holding force provided by the hook plate torsion spring 805 to maintain contact between the hook plate 804 and the limit rod 806 is 5 N to 30 N. In the present embodiment, the holding force provided by the hook plate torsion spring 805 to maintain contact between the hook plate 804 and the limit rod 806 is 7 N.

When the main pedal 801 moves upon the user's depression, at least one of two surfaces that first contact each other between the hook plate 804 and the limit rod 806 is curved. The depression of the main pedal 801 by the user causes the hook plate 804 to abut against the limit rod 806 to rotate the hook plate 804, until an inner side of the hook plate 804 passes around the limit rod 806 and engages with the limit rod 806, thereby achieving the parking operation.

The auxiliary pedal 802 is movably connected to the main pedal 801. Upon the depression of the auxiliary pedal 802 by the user, the hook plate 804 is disengageable from the limit rod 806. Specifically, when the user depresses the auxiliary pedal 802, the auxiliary pedal 802 moves and presses against the hook plate 804, causing the hook plate 804 to rotate away from the limit rod 806 and disengage from the limit rod 806. When the user depresses the auxiliary pedal 802, A maximum rotation angle through which the hook plate 804 shifts from an engaged state with the limit rod 806 to a disengaged state from the limit rod 806 upon the depression of the auxiliary pedal 802 ranges from 5° to 30°.

In the present embodiment, the auxiliary pedal 802 is rotatably connected to the main pedal 801, and the rotation angle of the auxiliary pedal 802 upon the depression of the auxiliary pedal 802 by the user ranges from 0° to 90°.

In some other embodiments, the auxiliary pedal 802 may also be slidably disposed on the main pedal 801, as long as it can be depressed to drive the hook plate 804 to rotate and disengage from the limit rod 806. The specific arrangement is not limited to the above-described rotational or sliding connection.

In the present embodiment, the main pedal 801 and the auxiliary pedal 802 can be depressed simultaneously or separately with a single foot, meaning that the auxiliary pedal 802 is close to the main pedal 801, and is generally disposed on one side of the main pedal 801. An auxiliary pedal torsion spring 803 is disposed at a hinge between the auxiliary pedal 802 and the main pedal 801. The auxiliary pedal torsion spring 803 biases the auxiliary pedal 802 to remain in a non-pressing state relative to the hook plate 804 when not depressed, preventing the vehicle from shaking due to external forces or user action and inadvertently striking the hook plate 804, which could cause release of the parking state. In the present embodiment, a depressing force applied by the user to the auxiliary pedal 802 to disengage the hook plate 804 from the limit rod 806 is 3 N to 100 N, which is less than the force required to depress the main pedal 801 to place the braking module 8 in the parking state.

Similar to the brake spring 808 described above, the hook plate torsion spring 805 and the auxiliary pedal torsion spring 803 in the present disclosure may also be replaced with compression springs or tension springs. A person skilled in the art can select an appropriate specific arrangement according to the actual situation, and details are not described herein.

Referring to FIGS. 2 to 5, in the present embodiment, the auxiliary pedal 802 is disposed at a rear side of the main pedal 801, such that when the user depresses, the ball of the foot acts on the main pedal 801 and the heel acts on the auxiliary pedal 802. Because users generally habitually apply more force with the ball of the foot when depressing, the depressing force on the main pedal 801 is greater than that on the auxiliary pedal 802 in the present embodiment, making this arrangement more consistent with user habits.

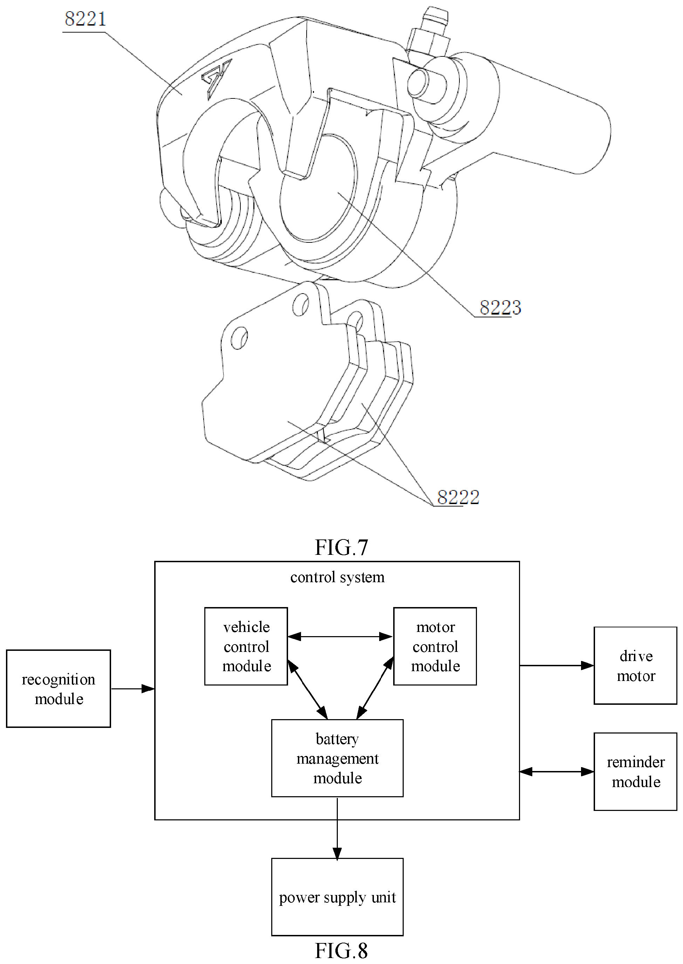

Referring to FIG. 8, the outdoor garden working vehicle of the present embodiment further includes a recognition module, a control system, and a reminder module.

The recognition module is configured to detect whether the main pedal 801 is depressed. The control system includes a vehicle control module, a motor control module, and a battery management module. The vehicle control module, the motor control module, and the battery management module are communicatively coupled with one another. The battery management module is communicatively coupled with the power supply unit. The motor control module is communicatively coupled with the drive motors. Upon that the recognition module detects that the main pedal 801 is depressed, the control system is configured to control the left drive motor and the right drive motor to stop rotating, thereby achieving a linkage between the drive motors and the braking module 8. This avoids the drive motors from keeping outputting power when braking is applied, which would otherwise lead to increased braking distance, overheating of the brake disc 823 or even dry burning, overheating of the drive motors, and other faults. The recognition module further sends a braking state reminder to the user via the reminder module, alerting the user that the vehicle is currently in a braking state.

Referring to FIG. 4, the recognition module in the present embodiment includes a micro switch 818 disposed on the frame. A switch pressing plate 819 is fixed to the rotating plate 807. When the main pedal 801 is in a naturally released state, the switch pressing plate 819 presses the micro switch 818. When the user depresses the main pedal 801 to rotate the rotating plate 807, the switch pressing plate 819 moves out of contact with the micro switch 818, whereupon the micro switch 818 triggers the left drive motor and the right drive motor to stop rotating. In the present embodiment, as long as the user depresses the main pedal 801 to cause it to rotate, the switch pressing plate 819 will disengage from the micro switch 818, thereby triggering the recognition module to control the drive motors to stop rotating.

A switch box 820 is fixedly disposed on the fixing bracket 809. The micro switch 818 and the switch pressing plate 819 are both mounted in the switch box 820. The switch box 820 provides protection for the micro switch 818 and the switch pressing plate 819, preventing external objects from contacting them and generating erroneous signals.

A hydraulic brake force damping adjustment mechanism is provided at the foot brake pump 811 for allowing the foot pedal assembly to be further depressed after hydraulic oil inside the foot brake pump 811 has been compressed to a limit. When the hydraulic oil inside the foot brake pump 811 is compressed to the limit, the friction pad 8222 of the brake caliper 822 is already in close abutment with the brake disc 823, and the piston rod inside the foot brake pump 811 cannot be further pressed to continue moving within the cylinder. Without the damping adjustment mechanism, when the hydraulic oil is compressed to the limit, the foot pedal assembly cannot be further depressed, and thus the user would feel that the foot pedal assembly is "very hard," resulting in a degraded depressing experience. With the damping adjustment mechanism, after the hydraulic oil is compressed to the limit, further depression compresses the damping adjustment mechanism, and the user can feel that the damping resistance gradually increases, but the gradually increasing damping resistance does not give the user a "very hard" feel, thereby improving the user experience.

The hydraulic brake force damping adjustment mechanism includes an oil pump bracket 813 and a damping member. The damping member is capable of elastic deformation when compressed. The oil pump bracket 813 is fixed to the frame 1. The damping member connects the foot brake pump 811 and the oil pump bracket 813. When the foot pedal assembly is further depressed after the hydraulic oil is compressed to the limit, the damping member deforms and applies a reverse elastic force to the foot brake pump 811.

The hydraulic brake force damping adjustment mechanism further includes a guide member connected to the foot brake pump 811. The guide member is configured to restrict the foot brake pump 811 to reciprocating motion only in a direction of being pressed by the foot pedal assembly. The guide member serves to prevent the foot brake pump 811 from tilting when moving, ensuring that various components move in predetermined directions and avoiding abnormal force conditions caused by tilting.

In the present embodiment, the damping member is a damping compression spring 815, and the guide member is a bolt 814. The bolt 814 sequentially passes through the foot brake pump 811 and the damping compression spring 815 and is threadedly connected to the oil pump bracket 813. The foot brake pump 811 is slidably sleeved on the bolt 814, and the bolt 814 limits a maximum distance between the foot brake pump 811 and the oil pump bracket 813. The damping compression spring 815 is disposed between the foot brake pump 811 and the oil pump bracket 813. When the pressing force applied by the threaded push rod 812 to the foot brake pump 811 is greater than the elastic force of the damping compression spring, the damping compression spring is further compressed, and the foot brake pump 811 can move relative to the oil pump bracket 813.

The damping member has an initial damping force after assembly. This initial damping force is slightly less than the pressing force applied by the threaded push rod 812 to the foot brake pump 811 when the vehicle is just completely braked (i.e., when the hydraulic oil is fully compressed). That is, during the stage from the beginning of depressing the foot pedal assembly to when the hydraulic oil is fully compressed, the damping member has already begun to deform. When the foot pedal assembly is further depressed after the hydraulic oil is fully compressed, only the damping member continues to deform, and the rebound force applied to the user's foot by this deformation increases linearly. In this way, the required depressing force by the user from the beginning of depressing the foot pedal assembly to the point where further depression is impossible always increases gradually, eliminating an abrupt sharp increase in the depression force required for continued pedal travel of the foot pedal assembly, thereby further improving the user's pedal feel.

When the main pedal 801 is in a naturally released state, the damping compression spring is in a first state. When the hook plate 804 is engaged with the limit rod 806, the damping compression spring 815 is in a second state. A compression amount of the damping compression spring 815 in the second state is greater than that in the first state. A difference in compression amount of the damping compression spring 815 between the second state and the first state is 1 mm to 60 mm. This difference in compression amount is a distance that the foot brake pump 811 moves, and a reasonable distance range also serves to improve the user's pedal feel.

In some other embodiments, the damping member may also be a torsion bar spring, an air spring, a hydro-pneumatic spring, a rubber spring, or various other types. A guiding function of the guide member may also be achieved by a guide rail or other limiting means. The arrangement is similar to that of the brake spring described above, and a person skilled in the art can perform simple adaptive assembly according to requirements to achieve the above effects.

An adjustment nut 817 is disposed between the threaded push rod 812 and the rotating plate 807. The adjustment nut 817 is connected to the rotating plate 807. The threaded push rod 812 is threadedly connected to the adjustment nut 817. An end of the threaded push rod 812 away from the adjustment nut 817 abuts against a piston rod of the foot brake pump 811. The threaded push rod 812 has a threaded portion configured to cooperate with the adjustment nut 817 to adjust a position of the threaded push rod 812 relative to the rotating plate 807, which reduces an idle stroke caused by mechanical cumulative errors and significantly shortens the response time of the foot brake pump. Referring to the drawings, to facilitate installation of the adjustment nut 817, in the present embodiment, a connection plate 816 is disposed on the rotating plate 807, and the adjustment nut 817 is rotatably connected to the connection plate 816. Rotating the adjustment nut 817 can adjust a length of the threaded push rod 812 threaded into the connection plate 816, thereby shortening the response time of the foot brake pump.

In some embodiments of the present disclosure, the outdoor garden working vehicle further includes a user seat 2 connected to the frame 1, allowing the user to sit rather than stand while driving, facilitating the user to free up both feet for depressing the foot pedal assembly.

In some embodiments, the outdoor garden working vehicle further includes a standing platform connected to the frame 1 for the user to stand on while driving, providing the user with better visibility.

In some embodiments, the present disclosure further provides a lawn mower. The lawn mower includes a frame 1, a left drive axle assembly 5, a right drive axle assembly 6, a mowing mechanism 7, a power supply unit, and a braking module. The left drive axle assembly 5 is mechanically coupled between a left drive motor and a left drive wheel 3 to transmit power from the left drive motor to the left drive wheel 3. The right drive axle assembly 6 is mechanically coupled between a right drive motor and a right drive wheel 4 to transmit power from the right drive motor to the right drive wheel 4. The mowing mechanism 7 is disposed at a lower portion of the frame 1 for cutting ground vegetation. The power supply unit is electrically connected to the left drive motor, the right drive motor, and the mowing mechanism 7, and is configured to supply power to the left drive motor, the right drive motor, and the mowing mechanism 7. The braking module includes a parking and service brake assembly and a foot brake pump 811. The parking and service brake assembly includes a foot pedal assembly. The foot pedal assembly is hinged to the frame 1 and forms a lever with the foot brake pump 811. Depression of the foot pedal assembly by a user actuates the foot brake pump 811 to generate a braking force on the left drive axle assembly 5 and the right drive axle assembly 6.

In some embodiments, the present disclosure further provides an electric outdoor garden working vehicle. The electric outdoor garden working vehicle includes a frame 1, a left drive axle assembly 5, a right drive axle assembly 6, a mowing mechanism 7, a power supply unit, and a braking module. The left drive axle assembly 5 is mechanically coupled between a left drive motor and a left drive wheel 3 to transmit power from the left drive motor to the left drive wheel 3. The right drive axle assembly 6 is mechanically coupled between a right drive motor and a right drive wheel 4 to transmit power from the right drive motor to the right drive wheel 4. The mowing mechanism 7 is disposed at a lower portion of the frame 1 for cutting ground vegetation. The power supply unit is electrically connected to the left drive motor, the right drive motor, and the mowing mechanism 7, and is configured to supply power to the left drive motor, the right drive motor, and the mowing mechanism 7. The braking module includes a parking and service brake assembly and a foot brake pump 811. The parking and service brake assembly includes a foot pedal assembly. The foot pedal assembly is hinged to the frame 1 and forms a lever with the foot brake pump 811. Depression of the foot pedal assembly by the user actuates the foot brake pump 811 to generate a braking force on the left drive axle assembly 5 and the right drive axle assembly 6.

In some embodiments, the present disclosure further provides a ride-on lawn mower. The ride-on lawn mower includes a frame 1, a seat, a left drive axle assembly 5, a right drive axle assembly 6, a mowing mechanism 7, a power supply unit, and a braking module. The seat is connected to the frame 1 and is configured for a user to sit on. The left drive axle assembly 5 is mechanically coupled between a left drive motor and a left drive wheel 3 to transmit power from the left drive motor to the left drive wheel 3. The right drive axle assembly 6 is mechanically coupled between a right drive motor and a right drive wheel 4 to transmit power from the right drive motor to the right drive wheel 4. The mowing mechanism 7 is disposed at a lower portion of the frame 1 for cutting ground vegetation. The power supply unit is electrically connected to the left drive motor, the right drive motor, and the mowing mechanism 7, for supplying power to the left drive motor, the right drive motor, and the mowing mechanism 7. The braking module includes a parking and service brake assembly. Depression of the parking and service brake assembly by a user generates a braking force on the left drive axle assembly 5 and the right drive axle assembly 6. The parking and service brake assembly includes a foot pedal assembly. The foot pedal assembly includes a main pedal 801 and an auxiliary pedal 802. Depression of the main pedal 801 by the user places the braking module into either a braking state or a parking state, and the depression of the auxiliary pedal 802 by the user vegetation release the braking module from the parking state.

In some embodiments, the present disclosure further provides an outdoor garden working vehicle. The outdoor garden working vehicle includes a frame 1, a left drive axle assembly 5, a right drive axle assembly 6, a working mechanism, a power supply unit, and a braking module. The left drive axle assembly 5 is mechanically coupled between a left drive motor and a left drive wheel 3 to transmit power from the left drive motor to the left drive wheel 3. The right drive axle assembly 6 is mechanically coupled between a right drive motor and a right drive wheel 4 to transmit power from the right drive motor to the right drive wheel 4. The working mechanism is disposed at a lower portion of the frame 1 and is configured to perform outdoor work on the ground. The power supply unit is electrically connected to the left drive motor, the right drive motor, and the working mechanism, and is configured to supply power to the left drive motor, the right drive motor, and the working mechanism. The braking module includes a parking and service brake assembly. Depression of the parking and service brake assembly by the user generates a braking force on the left drive axle assembly 5 and the right drive axle assembly 6. The parking and service brake assembly includes a foot pedal assembly. The foot pedal assembly includes a main pedal 801 and an auxiliary pedal 802. Depression of the main pedal 801 by the user places the braking module into either a braking state or a parking state, and the depression of the auxiliary pedal 802 by the user releases the braking module from the parking state.

In some embodiments, the present disclosure further provides an electric outdoor garden working vehicle. The electric outdoor garden working vehicle includes a frame 1, a left drive axle assembly 5, a right drive axle assembly 6, a working mechanism, a power supply unit, and a braking module. The left drive axle assembly 5 is mechanically coupled between a left drive motor and a left drive wheel 3 to transmit power from the left drive motor to the left drive wheel 3. The right drive axle assembly 6 is mechanically coupled between a right drive motor and a right drive wheel 4 to transmit power from the right drive motor to the right drive wheel 4. The working mechanism is disposed at a lower portion of the frame 1 and is configured to perform outdoor work on the ground. The power supply unit is electrically connected to the left drive motor, the right drive motor, and the working mechanism, and is configured to supply power to the left drive motor, the right drive motor, and the working mechanism. The braking module includes a parking and service brake assembly and a foot brake pump 811. The parking and service brake assembly includes a foot pedal assembly. Depression of the foot pedal assembly by the user, the foot pedal assembly presses the foot brake pump 811 to generate a braking force on the left drive axle assembly 5 and the right drive axle assembly 6.

In some embodiments, the present disclosure also provides a ride-on outdoor garden working vehicle. The ride-on outdoor garden working vehicle includes a frame 1, a seat, a left drive axle assembly 5, a right drive axle assembly 6, a working mechanism, a power supply unit, and a braking module. The seat is connected to the frame 1 and is configured for a user to sit on. The left drive axle assembly 5 is mechanically coupled between a left drive motor and a left drive wheel 3 to transmit power from the left drive motor to the left drive wheel 3. The right drive axle assembly 6 is mechanically coupled between a right drive motor and a right drive wheel 4 to transmit power from the right drive motor to the right drive wheel 4. The working mechanism is disposed at a lower portion of the frame 1 and is configured to perform outdoor work on the ground. The power supply unit is electrically connected to the left drive motor, the right drive motor, and the working mechanism, and is configured to supply power to the left drive motor, the right drive motor, and the working mechanism. The braking module includes a parking and service brake assembly and a foot brake pump 811. The parking and service brake assembly includes a foot pedal assembly. Upon depression of the foot pedal assembly by the user, the foot pedal assembly presses the foot brake pump 811 to generate a braking force on the left drive axle assembly 5 and the right drive axle assembly 6. The parking and service brake assembly includes a foot pedal assembly. The foot pedal assembly includes a main pedal 801 and an auxiliary pedal 802. Depression of the main pedal 801 places the braking module into either a braking state or a parking state, and depression of the auxiliary pedal 802 by the user release the braking module from the parking state.

Lawn mowers are mainly used for lawn maintenance. Compared with manual maintenance, they can effectively reduce costs. In particular, rechargeable lawn mowers, compared with traditional fuel-powered lawn mowers, have the advantages of all-weather zero emissions, zero fuel consumption, low noise, and simple maintenance (no gasoline, no engine oil, no air filter, no spark plug, no fuel storage, etc.). Rechargeable lawn mowers use motors instead of fuel engines for the drive wheels, and the drive wheel motors can be independently controlled to achieve motion control such as straight travel, reverse travel, turning, and zero-turn, reducing the structural complexity of the entire vehicle and making vehicle control more flexible.

In existing rechargeable lawn mowers, the motor output shaft is connected to the wheels through a mechanism. When the ride-on lawn mower is stationary (not controlled) and an external force is used to push or pull it (towing), the rotation of the wheels drives the motor to rotate, placing the motor in a power generation state. If the towing speed is very high, i.e., the vehicle speed is very high, the voltage generated by the electric motor will also be very high. When the voltage exceeds a maximum voltage that the controller can withstand, the controller will be damaged and fail. Therefore, current rechargeable lawn mowers generally prohibit towing. However, in actual use, there are inevitably scenarios where long-distance transfer requires towing, such as moving, off-site maintenance, etc. This is especially true for commercial lawn mowers, which have higher transfer frequencies. This requires the user to use a special vehicle with lifting equipment to transfer the lawn mower, which is expensive and time-consuming.

In view of this, there is indeed a need to provide a zero-turn lawn mower capable of being towed, to overcome the defects existing in the related art.

Referring to FIGS. 9 to 13, a zero-turn lawn mower according to some embodiments of the present disclosure is shown, including: a frame, a drive axle assembly, a mowing mechanism, and a power supply unit.

The drive axle assembly includes a left drive axle assembly and a right drive axle assembly. Each of the left drive axle assembly and the right drive axle assembly is mechanically coupled between a drive motor 1 and a drive wheel on a corresponding side where the axle assembly is located, and is configured to transmit power from the drive motor 1 to the drive wheel. Referring to FIG. 9, the drive axle assembly is disposed at a rear portion of the lawn mower, such that rear wheels of the lawn mower serve as drive wheels, and front wheels of the lawn mower serve as caster wheels, thereby achieving a zero-turn function and improving the operational performance of the lawn mower.

The mowing mechanism is disposed at a lower portion of the frame and is configured to cut ground vegetation. Specifically, the left and right drive wheels are located at a rear portion of the mowing mechanism 7. It should be particularly noted that the mowing mechanism 7 should not be narrowly interpreted as a mechanism capable only of mowing grass; it may also be replaced with other functional attachments, such as snowplow or snow blower attachments. A person skilled in the art should be able to adaptively replace various functional attachments without creative effort, and all such replacements should be included within the protection scope of the present embodiment.

The power supply unit is electrically connected to the drive motors 1 and the mowing mechanism, and is configured to supply power to the drive motors 1 and the mowing mechanism. In the present embodiment, the power supply unit is a battery pack. In some other embodiments, a combination of an internal combustion engine and a battery may also be used. In such a configuration, the internal combustion engine burns fuel to generate electricity via a generator to charge the battery, and the battery then supplies power to various components of the lawn mower.

The drive axle assembly includes a housing and a plurality of shafts. At least one of the shafts is connected to a neutral mechanism. The neutral mechanism is controllable to place the drive axle assembly in a neutral state or an engaged state. In the engaged state, the drive axle assembly transmits power from the drive motor 1 to the drive wheel, such that the drive motor 1 can drive the lawn mower forward or backward. In the neutral state, the drive axle assembly does not transmit power from the drive motor 1 to the drive wheel. In this state, operation of the drive motor 1cannot move the lawn mower. When the lawn mower is towed by a towing device, the drive wheels rotate due to contact with the ground, however, rotational power is not transmitted to the drive motor 1, avoiding the motor from entering a power generation state, which thus avoids damage to the motor or controller.

The shafts include an input shaft 3 and an output shaft 5. The input shaft 3 is mechanically coupled to the drive motor 1, and the drive motor 1 rotates the input shaft 3. The output shaft 5 is coupled between the input shaft 3 and the drive wheel, and is configured to convey power from the drive motor 1 to the drive wheel.

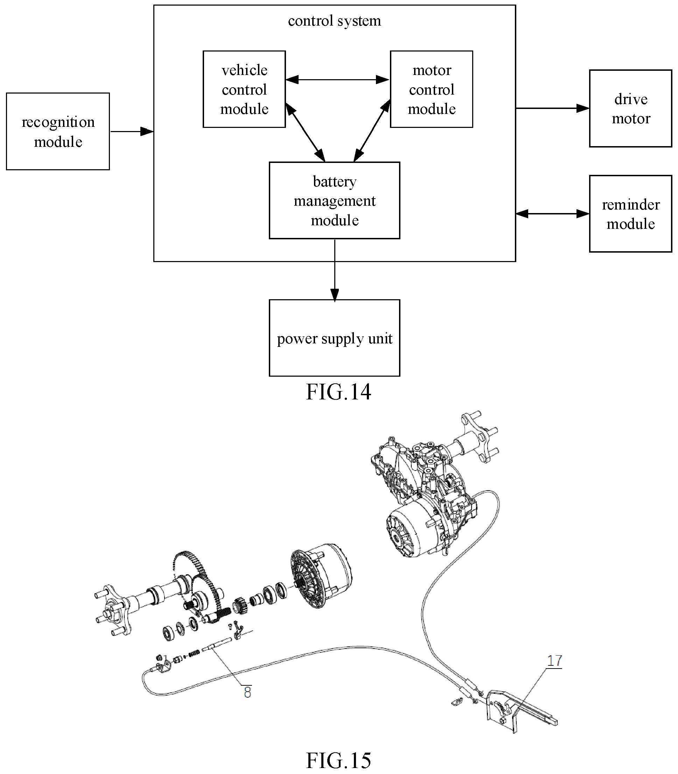

Referring to FIG. 14, the zero-turn lawn mower further includes a recognition module, a control system, and a reminder module. The recognition module is configured to recognize whether the drive axle assembly is in the neutral state. The control system includes a vehicle control module, a motor control module, and a battery management module. The vehicle control module, the motor control module, and the battery management module are communicatively coupled with one another. The battery management module is communicatively coupled with the power supply unit. The motor control module is communicatively coupled with the drive motors 1. When the recognition module detects that the drive axle assembly is in the neutral state, it sends a neutral state reminder to the user via the reminder module, clearly informing the user that the vehicle is currently in the neutral state. Accordingly, when the drive axle assembly is in the engaged state, the neutral state reminder disappears, and the user can know that the vehicle is not in the neutral state and can drive the lawn mower normally for mowing operations.

The neutral mechanism includes an operating portion and an action portion connected to each other. The action portion is capable of, under action of the operating portion, placing the drive axle assembly in the neutral state or the engaged state. The user controls the operating portion to move the action portion, thereby achieving a gear change.

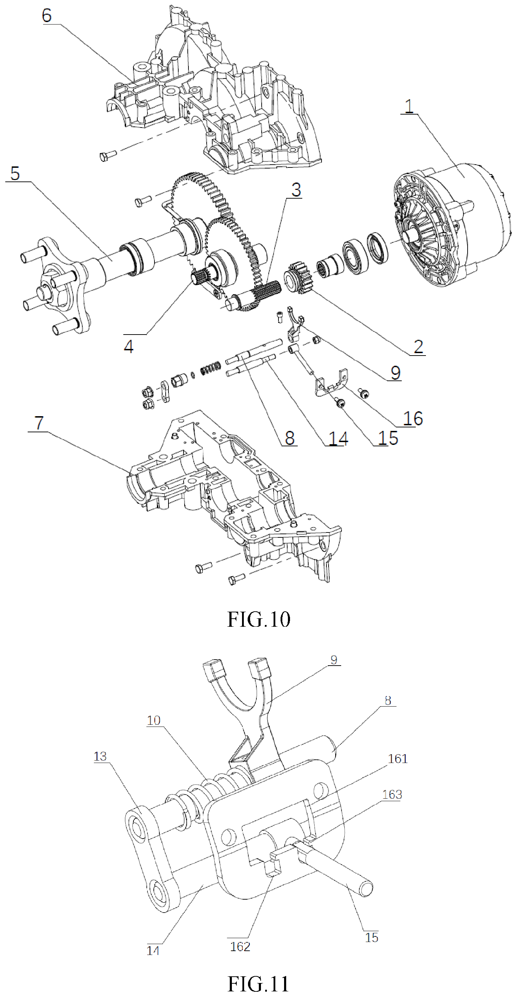

Referring to FIG. 10, in the present embodiment, a sliding gear 2 is disposed on the shaft on which the neutral mechanism is provided. The sliding gear 2 is capable of transmitting torque and slidable along the shaft. That is, when the shaft rotates, the sliding gear 2 rotates synchronously therewith. The sliding gear 2 can slide along the shaft. A fixing gear is disposed on another shaft adjacent to the shaft on which the neutral mechanism is provided. The operating portion may be controlled to drive the sliding gear 2 to slide along its shaft to engage or disengage the sliding gear 2 with the fixing gear. When the sliding gear 2 and the fixing gear are engaged, the drive axle assembly is in the engaged state. When the sliding gear 2 and the fixing gear are disengaged, the drive axle assembly is in the neutral state.

The sliding gear 2 is in splined engagement with its respective shaft. That is, the splined connection between the sliding gear 2 and the shaft enables them to rotate synchronously. For example, a spline may be provided on the shaft, and a spline groove (or a groove with other shapes mating with the spline) may be provided on the sliding gear 2, such that the spline can slide within the spline groove.

Specifically, referring to FIG. 10, in the present embodiment, an inner bore of the sliding gear 2 is provided with an internal spline, and the shaft, on which the sliding gear 2 is slidably connected, is provided with an external spline mating with the internal spline. Axial sliding of the sliding gear 2 along the external spline can switch between engaging with the fixing gear and disengaging therefrom, thereby switching the drive axle assembly between the engaged state and the neutral state.

Referring to FIGS. 10 to 13, the action portion includes a neutral shifting member. Sliding of the neutral shifting member along the respective shaft drives the sliding gear 2 to slide to switch the drive axle assembly between the engaged state and the neutral state.

In the present embodiment, a groove is formed circumferentially in the sliding gear 2, and one end of the neutral shifting member is engaged in the groove. The neutral shifting member may include a neutral shifting fork 9. An end of the neutral shifting fork 9 proximate to the sliding gear 2 is bifurcated and extends into the groove. The sliding gear 2 may be rotating, however, since the groove is an annular structure, when the neutral shifting fork 9 is engaged in the groove, the sliding gear 2 will not disengage from the neutral shifting fork 9 regardless of its rotational position. Moreover, when the neutral shifting fork 9 slides along the shaft, the sliding gear 2 will slide synchronously therewith.

To facilitate assembly of the neutral shifting fork 9 and the groove, an end of the neutral shifting fork 9 connected to the groove is provided with an arcuate outer edge, and a central angle of the arcuate outer edge is less than or equal to 180°.

In some embodiments, a protrusion is formed circumferentially on the sliding gear 2, and one end of the neutral shifting member is engaged with the protrusion. The neutral shifting member may be a neutral shifting rod. An end of the neutral shifting rod proximate to the sliding gear 2 is provided with a slot that engages with the protrusion, and the neutral shifting rod is operated to cause the sliding gear 2 to slide.

Referring to FIGS. 10 to 13, in some embodiments of the present disclosure, a sliding rod 8 is connected to the neutral shifting fork 9, and the sliding rod 8 is slidably connected to a housing of the gear reducer. That is, the neutral shifting fork 9 can slide relative to the housing of the gear reducer.

To facilitate control of the sliding rod 8, the operating portion includes the sliding rod 8. The sliding rod 8 extends through a side wall of the housing and is connected to a pull rod 14 located outside the housing. The pull rod 14 is provided with a handle 15 for manual grasping.

Since lubricating oil is generally provided in the gearbox to lubricate the gears, an O-ring 11 is provided on the sliding rod 8 to seal the connection between the housing and the sliding rod 8. Referring to FIG. 10, for ease of installation, an annular screw plug 12 is generally installed on the housing of the gearbox via fine threads, and the sliding rod 8 extends through the screw plug 12, with the O-ring 11 sealing the connection between the sliding rod 8 and the screw plug 12.

A spring 10 is sleeved on the sliding rod 8. Opposite ends of the spring 10 are respectively connected to the housing and an outer wall of the sliding rod 8. The spring 10 biases the sliding rod 8 with a spring force tending to move the sliding rod 8 to a state where the drive axle assembly is in the neutral state or the engaged state. This prevents the sliding gear 2 from being only partially engaged with the fixing gear along the axial direction of the shaft. If the sliding gear 2 is only partially engaged with the fixing gear, damage is likely to occur during power transmission due to excessive local pressure on the gears.

A limiting plate 16 is fixedly connected to an exterior of the housing. The limiting plate 16 is configured to limit the handle 15 to place the drive axle assembly in the neutral state or the engaged state, i.e., to enable the drive axle assembly to stably remain in a certain state. Specifically, the limiting plate 16 has two limiting grooves 162. When the handle 15 is engaged in one of the limiting grooves 162, the drive axle assembly is in the neutral state. When the handle 15 is engaged in the other one of the limiting grooves 162, the drive axle assembly is in the engaged state. The user can determine whether the drive axle assembly is in the neutral state or the engaged state based upon the position of the handle 15. In addition, the spring 10 causes the handle 15 to abut against a side wall of the limiting groove 162, i.e., the handle 15 experiences a certain damping when sliding along the side wall of the limiting groove 162. Therefore, the limiting groove 162 also provides a certain limiting effect on the handle 15, preventing the handle 15 from easily disengaging from the corresponding limiting groove 162.

The limiting plate 16 is provided with a slide channel 161 connecting the two limiting grooves 162. The handle 15 is slidable along the slide channel 161 from one limiting groove 162 to the other limiting groove 162, thereby switching the gear state of the drive axle assembly.

The limiting plate 16 is provided with a retaining member to prevent the handle 15 from disengaging from the limiting groove 162 due to vibration. In the present embodiment, the retaining member includes a limiting protrusion 163 provided on a side wall of the limiting groove 162. The handle 15, when in the limiting groove 162, is prevented from directly sliding into the slide channel 161 by a combined action of the spring 10 and the limiting protrusion 163. That is, the handle 15 abuts against the side wall of the limiting groove 162 under the action of the spring 10, and in this abutting state, the handle 15 is blocked by the limiting protrusion 163 and cannot slide into the slide channel 161. At this point, the user may manually pull the handle 15 to compress the spring 10 until the handle 15 bypasses the limiting protrusion 163, after which the handle 15 is permitted to slide into the slide channel 161.

A connection plate 13 is jointly connected to the sliding rod 8 and the pull rod 14. The connection plate 13 is located outside the housing. The connection plate 13 is configured to stably connect the handle 15 and the sliding rod 8, ensuring that the sliding rod 8 moves synchronously with the pull rod 14. The sliding rod 8 moves synchronously when the handle 15 moves linearly. To ensure that the neutral shifting fork 9 remains connected to the sliding gear 2, the sliding rod 8 should not rotate. Therefore, the handle 15 is rotatably connected to the pull rod 14, and the axial movement of the handle 15 along the pull rod 14 drives the pull rod 14 to move synchronously, i.e., the linear movement of the handle 15 correspondingly move the sliding rod 8 synchronously.

In some embodiments, the handle 15 may be replaced with an electric linear actuator. Specifically, the sliding rod 8 extends through a side wall of the housing, and the electric linear actuator connected to the sliding rod 8 is disposed outside the housing. The electric linear actuator may be controlled to extend and retract to drive the sliding rod 8 to move, thereby switching the drive axle assembly between the neutral state and the engaged state. This achieves gear switching via the electric linear actuator.

Referring to FIG. 15, in some embodiments, gear switching may also be controlled via a hand brake cable. Specifically, the sliding rod 8 extends through a side wall of the housing. The zero-turn lawn mower further includes a hand brake 17 and a hand brake cable. The hand brake cable is connected to the sliding rod 8. Operating the hand brake 17 to move the hand brake cable causes the sliding rod 8 to move therewith, thereby switching the drive axle assembly between the neutral state and the engaged state.

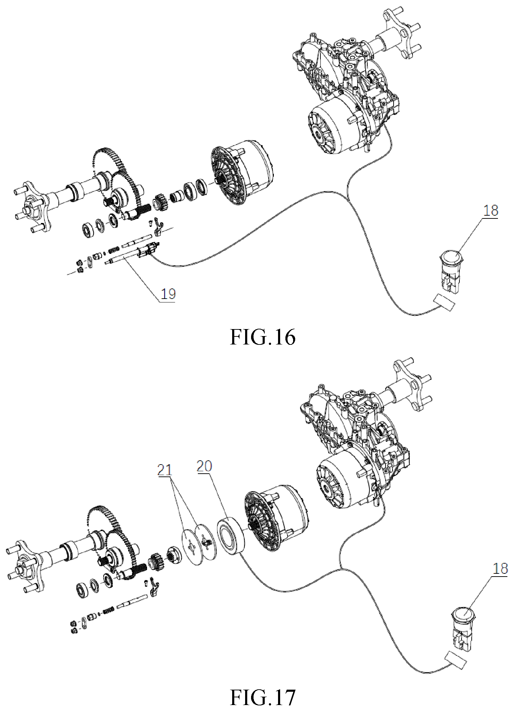

Referring to FIG. 16, in some embodiments, gear switching may also be controlled via an electric linear actuator 19. Specifically, the sliding rod 8 extends through a side wall of the housing. The zero-turn lawn mower further includes a control switch 18 and an electric linear actuator 19. The electric linear actuator 19 is connected to the sliding rod 8. Manipulating the control switch 18 causes the electric linear actuator 19 to extend and retract to move the sliding rod 8, thereby switching the drive axle assembly between the neutral state and the engaged state.

Referring to FIG. 10, in some embodiments of the present disclosure, the shaft on which the sliding gear 2 is disposed is parallel to the shaft on which the fixing gear is disposed. The sliding gear 2 and the fixing gear are both spur gears. The sliding gear 2 slides axially along the fixing gear until engagement or disengagement is achieved.

In some embodiments of the present disclosure, the shaft on which the sliding gear 2 is disposed is not parallel to the shaft on which the fixing gear is disposed. The sliding gear 2 and the fixing gear are both bevel gears. Bevel gears not only achieve the same engagement and disengagement effects but also improves positional layout flexibility of the shaft carrying the sliding gear 2 to a certain extent. In this embodiment, there is no need to ensure that the shaft of the sliding gear 2 and the shaft of the fixing gear are parallel; they can be arranged at any angle within a common plane. This expand the layout options for the motor and the drive axle assembly, facilitating addition of other functional components around the drive axle or the motor by a person skilled in the art.

In the present disclosure, the sliding gear 2 may be disposed on the input shaft 3, and the fixing gear may be disposed on the output shaft 5; alternatively, the fixing gear may be disposed on the input shaft 3, and the sliding gear 2 may be disposed on the output shaft 5. Furthermore, the plurality of shafts further includes one or more intermediate shafts 4 disposed between the input shaft 3 and the output shaft 5. The intermediate shafts 4 are capable of transmitting power from the input shaft 3 to the output shaft 5. A common drive axle housing is generally a gear reducer. In general, the greater the number of intermediate shafts 4, the greater the reduction ratio of the gearbox. For example, a gearbox with one intermediate shaft 4 is a 2-stage reduction unit, and a gearbox with two intermediate shafts 4 is a 3-stage reduction unit.

When the drive axle assembly includes an intermediate shaft 4, if the sliding gear 2 is disposed on the input shaft 3, the fixing gear may be disposed on the intermediate shaft 4 adjacent to the input shaft 3. Alternatively, the sliding gear 2 may be disposed on the output shaft 5, and the fixing gear may be disposed on the intermediate shaft 4 adjacent to the output shaft 5. Alternatively, the sliding gear 2 may be disposed on one of the intermediate shafts 4, and the fixing gear may be disposed on an adjacent intermediate shaft 4, the input shaft 3, or the output shaft 5.

Referring to FIG. 10, in some embodiments of the present disclosure, the drive axle assembly employs a 2-stage gear reducer, with one intermediate shaft 4. The sliding gear 2 is disposed on the input shaft 3, and the fixing gear is disposed on the intermediate shaft 4. Since an outer end surface of the input shaft 3 is relatively close to the tire, disposing the handle 15 of the neutral mechanism between the drive axle assembly and the tire would result in very compact space and inconvenient user operation. In addition, a plastic cover is generally mounted above the tire, and thus there is no operating space above a center plane of the drive axle assembly housing. Therefore, in the present embodiment, the handle 15 is located, in a horizontal direction, within an area inside an outer end surface of the housing, and, in a vertical direction, within an area below a center plane of the housing. This increases the operating space and simplifies the difficulty of operation. Moreover, since the user does not normally touch the location of the handle 15 during normal operation, the probability of unintended touching of the handle 15 causing a gear error is reduced.

In some embodiments, the drive axle assembly may also employ a planetary gear reducer. The planetary gear reducer includes a sun gear, a ring gear, and a plurality of planetary gears. The ring gear is fixed to the housing. The plurality of planetary gears are jointly connected to a planetary carrier. The input shaft 3 is connected to the sun gear, and the output shaft 5 is connected to the planetary carrier. The shaft of the sun gear and the shaft of the planetary carrier are intermediate shafts 4. In this case, the sliding gear 2 may be disposed on the shaft of the sun gear, and the fixing gear may be disposed on the shaft of the planetary gear.

Referring to FIG. 17, in other embodiments, the neutral mechanism may also adopt a solution other than the sliding gear 2 and the fixing gear. For example, the neutral mechanism includes an operating portion and an action portion. The operating portion includes a control switch 18. The action portion includes an electromagnetic clutch 20. The shaft on which the electromagnetic clutch 20 is provided is divided into a front shaft portion and a rear shaft portion arranged coaxially. The electromagnetic clutch 20 includes two synchronizers 21 respectively disposed on the front shaft portion and the rear shaft portion. The control switch 18 can control the two synchronizers 21 to abut against or separate from each other. When the two synchronizers 21 abut against each other, power is transmitted between the front shaft portion and the rear shaft portion, and the drive axle assembly is in the engaged state. When the two synchronizers 21 are separated, power transmission is interrupted between the front shaft portion and the rear shaft portion, and the drive axle assembly is in the neutral state.

In some embodiments, the present disclosure further provides an outdoor garden working vehicle, including a frame, a drive axle assembly, a working mechanism, and a power supply unit. The drive axle assembly includes a left drive axle assembly and a right drive axle assembly. Each of the left drive axle assembly and the right drive axle assembly is mechanically coupled between a drive motor and a drive wheel on a corresponding side and is configured to transmit power from the drive motor to the drive wheel. The working mechanism is disposed at a lower portion of the frame for performing outdoor work on the ground. The power supply unit is electrically connected to the drive motors of the left drive axle assembly and the right drive axle assembly and the working mechanism, and is configured to supply power to the drive motors and the working mechanism.

The drive axle assembly includes a housing and a plurality of shafts. At least one of the shafts is connected to a neutral mechanism. The neutral mechanism may be controlled to place the drive axle assembly in a neutral state or an engaged state. In the engaged state, the drive axle assembly transmits power from the drive motor to the drive wheel. In the neutral state, the drive axle assembly stops transmitting power from the drive motor to the drive wheel. The plurality of shafts includes an input shaft and an output shaft. The input shaft is mechanically coupled to the drive motor, and the drive motor rotates the input shaft. The output shaft is coupled between the input shaft and the drive wheel, for outputting power from the drive motor to the drive wheel.

In some embodiments, the present disclosure further provides a ride-on garden working vehicle, including a frame, a seat, a drive axle assembly, a working mechanism, and a power supply unit. The seat is connected to the frame for a user to sit on. The drive axle assembly includes a left drive axle assembly and a right drive axle assembly. Each of the left drive axle assembly and the right drive axle assembly is respectively mechanically coupled between a drive motor and a drive wheel on a corresponding side and is configured to transmit power from the drive motor to the drive wheel. The working mechanism is disposed at a lower portion of the frame for performing outdoor work on the ground. The power supply unit is electrically connected to the drive motors of the left drive axle assembly and the right drive axle assembly and the working mechanism, and is configured to supply power to the drive motors and the working mechanism.

The drive axle assembly includes a housing and a plurality of shafts. At least one of the shafts is connected to a neutral mechanism. The neutral mechanism may be controlled to place the drive axle assembly in a neutral state or an engaged state. In the engaged state, the drive axle assembly transmits power from the drive motor to the drive wheel. In the neutral state, the drive axle assembly stops transmitting power from the drive motor to the drive wheel. The plurality of shafts includes an input shaft and an output shaft. The input shaft is mechanically coupled to the drive motor, and the drive motor rotates the input shaft. The output shaft is coupled between the input shaft and the drive wheel, for outputting power from the drive motor to the drive wheel.

In summary, in the embodiments of the present disclosure, a neutral mechanism is provided, and the neutral mechanism includes an operating portion and an action portion. The user directly controls the operating portion to control the action portion located inside the drive axle assembly, thereby placing the drive axle in the neutral state or the engaged state. In the neutral state, rotation of the wheels cannot transmit power to the drive motor, thereby preventing the drive motor from being in a power generation state during towing and causing damage to the lawn mower. When the lawn mower is being used normally for mowing, the drive axle assembly is in the engaged state, and the power of the drive motor can be effectively transmitted to the drive wheels, allowing the lawn mower to operate normally.

It is further noted that at least a portion of the power supply unit is detachably connected to the frame. The power supply unit includes a plurality of battery units detachable from the frame. The plurality of battery units may include at least one of a firs-specification battery pack and a second-specification battery pack. Differences between the first-specification battery pack and the second-specification battery pack lie in, but are not limited to, battery pack capacity, voltage, internal resistance, weight, size, energy density, cell type, state of charge information, state of health information, and the like.

In some embodiments, the difference between the first-specification battery pack and the second-specification battery pack lies in the battery pack capacities. The capacity of the first-specification battery pack is greater than the capacity of the second-specification battery pack. The second-specification battery pack is configured to provide power to handheld garden tools. For example, the second-specification battery pack can power garden tools such as string trimmers, hedge trimmers, blowers, and chain saws. In addition, the second-specification battery pack can also power torque output tools such as drills and impact hammers, sawing tools such as circular saws, jigsaws, and reciprocating saws, or grinding tools such as angle grinders and sanders.

In some embodiments, the difference between the first-specification battery pack and the second-specification battery pack lies in the type of battery cells used. For example, the first-specification battery pack and the second-specification battery pack may use lithium iron phosphate cells or ternary lithium cells, respectively. The plurality of battery units in the power supply unit may also use nickel-chromium battery cells, lead-acid battery cells, graphene cells, or the like.

By configuring the plurality of battery units of the power supply unit to employ at least one of a first-specification battery pack and a second-specification battery pack, the multifunctional vehicle may be compatible with battery packs of different specifications, meeting high-power working requirements while also being adaptable to handheld electric garden tools, thereby improving operational flexibility for gardening personnel.

In some embodiments, the power supply unit further includes a battery compartment, a battery management system, etc. The battery compartment is used to accommodate the battery packs, and the battery management system is used to manage power supply from the battery packs to various components of the vehicle.

In some embodiments, the battery compartment and/or the battery management system is disposed on the frame. The battery pack is detachably disposed in the battery compartment, allowing the battery pack to be detachable and replaceable. The removed battery pack can be used for other electric garden tools. Moreover, the detachable battery pack design eliminates the need to wait for a long charging time when the vehicle's power is low or exhausted; the vehicle can quickly return to an operable state simply by replacing the battery pack.

In some embodiments, the battery compartment is detachably disposed on the frame, and the battery pack is accommodated in the battery compartment, i.e., the battery compartment as a whole can be separated from or integrated into the frame.

In some embodiments, the garden working mechanism is implemented as a cutting deck, and the garden working vehicle herein is a lawn mower. In addition, if the garden working mechanism is a snowplow attachment, the multifunctional garden vehicle is a snowplow. That is, the garden working mechanism serves as the main functional component of the multifunctional garden vehicle and can be changed according to user selection. At the same time, in some embodiments, the above-described garden working mechanism may also be a component that the user replaces according to actual needs. For example, replacing the cutting deck for mowing with a sweeping disc for sweeping would convert the lawn mower into a sweeper. In summary, replacing the garden working mechanism with any functional component according to user's needs should not be interpreted as departing from the protection scope of the present embodiment.

As described above, a working vehicle equipped with a power supply unit is a rechargeable working vehicle. Compared with traditional fuel-powered working vehicles, rechargeable working vehicles have the advantages of all-weather zero emissions, zero fuel consumption, low noise, and simple maintenance (no gasoline, no engine oil, no air filter, no spark plug, no fuel storage, etc.). The powertrain of a rechargeable working vehicle uses an electric motor instead of a fuel engine, and the motors of the drive wheels can be independently controlled to achieve motion control such as straight travel, reverse travel, turning, and zero-turn, reducing the structural complexity of the entire vehicle and making vehicle control more flexible.

It should also be noted that the terms "including," "including," or any other variation thereof are intended to cover a non-exclusive inclusion, such that a process, method, article, or device that includes a list of elements includes not only those elements but also other elements not expressly listed, or elements inherent to such process, method, article, or device. Without further limitation, an element defined by the phrase "comprising a ..." does not exclude the presence of additional identical elements in the process, method, article, or device that includes the element.

The various embodiments in the present disclosure are described in a progressive manner, and the same or similar parts between the various embodiments may be referred to each other. Each embodiment focuses on the differences from other embodiments.

The present disclosure is not limited to the above-described specific embodiments. A person of ordinary skill in the art can readily appreciate that there are many alternative solutions for the brake device and the neutral mechanism of the present disclosure without departing from the principle and scope of the present disclosure. The protection scope of the present disclosure is defined by the claims.

## Claims

1. An outdoor garden working vehicle, comprising:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a working mechanism disposed at a lower portion of the frame for performing outdoor work on the ground;
a power supply unit electrically connected to the left drive motor, the right drive motor, and the working mechanism, and configured to supply power to the left drive motor, the right drive motor, and the working mechanism; and
a braking module, comprising:
a parking and service brake assembly and a foot brake pump, wherein the parking and service brake assembly comprises a foot pedal assembly, and the foot pedal assembly is hinged to the frame and forms a lever with the foot brake pump, wherein depression of the foot pedal assembly by a user actuates the foot brake pump to generate a braking force on the left drive axle assembly and the right drive axle assembly.

2. The outdoor garden working vehicle according to claim 1, wherein the foot pedal assembly and the foot brake pump form a mechanical advantage lever, and when the user depresses the foot pedal assembly, a ratio of an input moment arm to an output moment arm of the mechanical advantage lever is 1-20:1.

3. The outdoor garden working vehicle according to claim 2, wherein the braking module further comprises: a hydraulic tube, a left brake component, and a right brake component;
wherein upon depression of the foot pedal assembly by the user, the foot brake pump is actuated to exert braking pressure upon the left brake component and the right brake component simultaneously via the hydraulic tube, and each of the left brake component and the right brake component applies a braking force to a corresponding drive axle assembly of the left drive axle assembly and the right drive axle assembly, thereby braking the left drive wheel and the right drive wheel;
wherein a depressing force applied by the user to the foot pedal assembly to achieve braking is 20 N to 500 N.

4. The outdoor garden working vehicle according to claim 3, wherein the depressing force applied by the user to the foot pedal assembly to achieve braking is 30 N to 200 N.

5. The outdoor garden working vehicle according to claim 3, wherein the left drive axle assembly and the right drive axle assembly each employ a two-or-more-stage gear reducer, the gear reducer comprising an input shaft, an output shaft, and an intermediate shaft; and
each of the left brake component and the right brake component is disposed on a non-output shaft of the gear reducer of the corresponding drive axle assembly.

6. The outdoor garden working vehicle according to claim 5, wherein each of the left brake component and the right brake component is disposed on the intermediate shaft of the gear reducer of the corresponding drive axle assembly.

7. The outdoor garden working vehicle according to claim 6, wherein the left brake component and the right brake component each comprise a brake caliper mounted on the corresponding drive axle assembly, and a brake disc fixedly connected to the shaft on which the left brake component or the right brake component is disposed; when the user depresses the foot pedal assembly, the brake caliper presses against the brake disc to generate a braking force.

8. The outdoor garden working vehicle according to claim 7, wherein the brake caliper of each of the left brake component and the right brake component comprises a caliper hydraulic cylinder, a caliper piston rod, and a friction pad; when the foot brake pump supplies braking pressure to the caliper hydraulic cylinder via the hydraulic tube, the caliper piston rod causes the friction pad to press against the brake disc to generate a braking force.

9. The outdoor garden working vehicle according to claim 8, wherein the brake caliper has a single cylinder bore, the caliper hydraulic cylinder is slidably mounted to the frame or the gear reducer of the corresponding drive axle assembly, the friction pad comprises a movable friction pad and a stationary friction pad, the movable friction pad being fixed to the caliper piston rod and located on one side of the brake disc, the stationary friction pad being disposed on an opposite side of the brake disc; when the foot brake pump supplies the braking pressure to the caliper hydraulic cylinder, the caliper piston rod pushes the movable friction pad and the stationary friction pad to clamp the brake disc.

10. The outdoor garden working vehicle according to claim 9, wherein a floating mounting bracket is fixed to the frame or the gear reducer of the corresponding drive axle assembly, and the caliper hydraulic cylinder is slidably connected to the floating mounting bracket.

11. The outdoor garden working vehicle according to claim 8, wherein the brake disc has a thickness of 2 mm to 6 mm and a diameter of 60 mm to 300 mm; the brake caliper has a hydraulic pressure range of 2 MPa to 40 MPa; the caliper piston rod has a piston stroke of 0.5 mm to 20 mm; the foot brake pump has a cylinder rod diameter of 5 mm to 30 mm; the caliper hydraulic cylinder has a diameter of 5 mm to 40 mm; and the foot brake pump has a cylinder rod stroke of 5 mm to 100 mm.

12. The outdoor garden working vehicle according to claim 5, wherein the left drive axle assembly and the right drive axle assembly each employ a 2-stage gear reducer, and a reduction ratio between the intermediate shaft on which the left brake component or the right brake component is disposed and the corresponding output shaft of the 2-stage gear reducer ranges from 1 to 50.

13. The outdoor garden working vehicle according to claim 2, wherein the parking and service brake assembly further comprises a rotating plate and a brake spring, wherein the rotating plate is rotatably connected to the frame, the foot pedal assembly is fixedly connected to the rotating plate, two opposite ends of the brake spring are respectively connected to the frame and the rotating plate, and a threaded push rod is connected to the rotating plate; and
when the user depresses the foot pedal assembly, the rotating plate rotates and pulls the brake spring, pushing the threaded push rod to press against the foot brake pump and generate a braking force.

14. The outdoor garden working vehicle according to claim 13, wherein the brake spring is configured as a brake tension spring, and when the user depresses the foot pedal assembly, the rotating plate rotates and stretches the brake tension spring.

15. The outdoor garden working vehicle according to claim 14, wherein the parking and service brake assembly further comprises a fixing bracket fixedly connected to the frame, the rotating plate being rotatably connected to the fixing bracket, and the brake tension spring having opposite ends respectively connected to the fixing bracket and the rotating plate.

16. The outdoor garden working vehicle according to claim 13, wherein the foot pedal assembly comprises a main pedal, an auxiliary pedal, a hook plate, and a hook plate torsion spring, and a limit rod is fixedly connected to the frame,
wherein the hook plate is rotatably connected to the main pedal, and when the user depresses the main pedal, the hook plate is engageable with the limit rod to place the braking module in a parking state;
the hook plate torsion spring is disposed on a rotation shaft of the hook plate for applying a spring force to the hook plate to maintain the hook plate engaged with the limit rod in the parking state; and
the auxiliary pedal is movably connected to the main pedal, and when the user depresses the auxiliary pedal, the hook plate is disengageable from the limit rod.

17. The outdoor garden working vehicle according to claim 16, wherein a holding force provided by the hook plate torsion spring to maintain contact between the hook plate and the limit rod is 5 N to 30 N.

18. The outdoor garden working vehicle according to claim 16, wherein the main pedal and the auxiliary pedal are configured to be depressed simultaneously or separately with a single foot.

19. The outdoor garden working vehicle according to claim 16, wherein when the user depresses the main pedal, at least one of two surfaces that first contact each other between the hook plate and the limit rod is curved, and depression of the main pedal by the user causes the hook plate to abut against the limit rod to rotate the hook plate, until an inner side of the hook plate passes around the limit rod and engages with the limit rod.

20. The outdoor garden working vehicle according to claim 16, wherein upon depression of the auxiliary pedal by the user, the auxiliary pedal moves and presses against the hook plate, causing the hook plate to rotate away from the limit rod and disengage from the limit rod.

21. The outdoor garden working vehicle according to claim 20, wherein a maximum rotation angle through which the hook plate shifts from an engaged state with the limit rod to a disengaged state from the limit rod upon the depression of the auxiliary pedal ranges from 5° to 30°.

22. The outdoor garden working vehicle according to claim 20, wherein the auxiliary pedal is rotatably connected to the main pedal, and a rotation angle of the auxiliary pedal upon the depression of the auxiliary pedal by the user ranges from 0° to 90°;
wherein an auxiliary pedal torsion spring is disposed at a hinge between the auxiliary pedal and the main pedal, the auxiliary pedal torsion spring biasing the auxiliary pedal to remain in a non-pressing state relative to the hook plate when not depressed.

23. The outdoor garden working vehicle according to claim 20, wherein a depressing force applied by the user to the auxiliary pedal to disengage the hook plate from the limit rod ranges from 3 N to 100 N.

24. The outdoor garden working vehicle according to claim 16, further comprising a recognition module and a control system,
wherein the recognition module is configured to detect whether the main pedal is depressed;
the control system comprises a vehicle control module, a motor control module, and a battery management module,
wherein the vehicle control module, the motor control module, and the battery management module are communicatively coupled with one another.
the battery management module is communicatively coupled with the power supply unit, and
the motor control module is communicatively coupled with the left drive motor and the right drive motor;
upon that the recognition module detects that the main pedal is depressed, the control system is configured to control the left drive motor and the right drive motor to stop rotating.

25. The outdoor garden working vehicle according to claim 24, wherein the recognition module comprises a micro switch disposed on the frame, and a switch pressing plate is fixed to the rotating plate,
when the main pedal is in a naturally released state, the switch pressing plate presses the micro switch, and
when the user depresses the main pedal to rotate the rotating plate, the switch pressing plate moves out of contact with the micro switch, whereupon the micro switch triggers the left drive motor and the right drive motor to stop rotating.

26. The outdoor garden working vehicle according to claim 1, wherein a hydraulic brake force damping adjustment mechanism is provided at the foot brake pump for allowing the foot pedal assembly to be further depressed after hydraulic oil inside the foot brake pump has been compressed to a limit.

27. The outdoor garden working vehicle according to claim 26, wherein the hydraulic brake force damping adjustment mechanism comprises an oil pump bracket and a damping member, the oil pump bracket being fixed to the frame, the damping member connecting the foot brake pump and the oil pump bracket.

28. The outdoor garden working vehicle according to claim 27, wherein the hydraulic brake force damping adjustment mechanism further comprises a guide member connected to the foot brake pump, the guide member being configured to restrict the foot brake pump to reciprocating motion only in a direction of being pressed by the foot pedal assembly.

29. The outdoor garden working vehicle according to claim 28, wherein the damping member is a damping compression spring, the guide member is a bolt, the bolt sequentially passes through the foot brake pump and the damping compression spring and is threadedly connected to the oil pump bracket, and the damping member has an initial damping force after assembly.

30. The outdoor garden working vehicle according to claim 16, wherein when the main pedal is in a naturally released state, the damping compression spring is in a first state; when the hook plate is engaged with the limit rod, the damping compression spring is in a second state; a compression amount of the damping compression spring in the second state is greater than that in the first state; and a difference in the compression amount of the damping compression spring between the second state and the first state is 1 mm to 60 mm.

31. The outdoor garden working vehicle according to claim 1, further comprising a user seat connected to the frame.

32. A lawn mower, comprising:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a mowing mechanism disposed at a lower portion of the frame for cutting ground vegetation;
a power supply unit electrically connected to the left drive motor, the right drive motor, and the mowing mechanism, and configured to supply power to the left drive motor, the right drive motor, and the mowing mechanism; and
a braking module, comprising:
a parking and service brake assembly and a foot brake pump, wherein the parking and service brake assembly comprises a foot pedal assembly, and the foot pedal assembly is hinged to the frame and forms a lever with the foot brake pump, wherein depression of the foot pedal assembly by a user actuates the foot brake pump to generate a braking force on the left drive axle assembly and the right drive axle assembly.

33. An electric outdoor garden working vehicle, comprising:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a working mechanism disposed at a lower portion of the frame for performing outdoor work on the ground;
a power supply unit electrically connected to the left drive motor, the right drive motor, and the working mechanism, and configured to supply power to the left drive motor, the right drive motor, and the working mechanism; and
a braking module, comprising:
a parking and service brake assembly and a foot brake pump, wherein the parking and service brake assembly comprises a foot pedal assembly, and the foot pedal assembly is hinged to the frame and forms a lever with the foot brake pump, wherein depression of the foot pedal assembly by a user actuates the foot brake pump to generate a braking force on the left drive axle assembly and the right drive axle assembly.

34. An outdoor garden working vehicle, comprising:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a mowing mechanism disposed at a lower portion of the frame for cutting ground vegetation;
a power supply unit electrically connected to the left drive motor, the right drive motor, and the mowing mechanism, and configured to supply power to the left drive motor, the right drive motor, and the mowing mechanism; and
a braking module comprising a parking and service brake assembly, wherein depression of the parking and service brake assembly by the user generates a braking force on the left drive axle assembly and the right drive axle assembly,
wherein the parking and service brake assembly comprises a foot pedal assembly, and the foot pedal assembly comprises a main pedal and an auxiliary pedal, wherein depression of the main pedal by the user places the braking module into either a braking state or a parking state, and depression of the auxiliary pedal by the user releases the braking module from the parking state.

35. The outdoor garden working vehicle according to claim 34, wherein the main pedal and the auxiliary pedal are configured to be depressed simultaneously or separately with a single foot.

36. The outdoor garden working vehicle according to claim 34, wherein the braking module further comprises a foot brake pump, and the parking and service brake assembly further comprises a rotating plate and a brake spring,
wherein the rotating plate is rotatably connected to the frame, the foot pedal assembly is fixedly connected to the rotating plate, two opposite ends of the brake spring are respectively connected to the frame and the rotating plate, and a threaded push rod is connected to the rotating plate;
wherein when the user depresses the foot pedal assembly, the rotating plate rotates and stretches the brake spring, to push the threaded push rod to press against the foot brake pump and generate a braking force.

37. The outdoor garden working vehicle according to claim 36, wherein the brake spring is configured as a brake tension spring, and when the user depresses the foot pedal assembly, the rotating plate rotates and stretches the brake tension spring.

38. The outdoor garden working vehicle according to claim 36, wherein the braking module further comprises: a hydraulic tube, a left brake component, and a right brake component;
wherein upon depression of the foot pedal assembly by the user, the foot brake pump is actuated to exert braking pressure upon the left brake component and the right brake component simultaneously via the hydraulic tube, and each of the left brake component and the right brake component applies a braking force to a corresponding drive axle assembly of the left drive axle assembly and the right drive axle assembly, thereby braking the left drive wheel and the right drive wheel.

39. The outdoor garden working vehicle according to claim 36, wherein the foot pedal assembly further comprises a hook plate and a hook plate torsion spring, and a limit rod is fixedly connected to the frame,
wherein the hook plate is rotatably connected to the main pedal, and when the user depresses the main pedal, the hook plate is engageable with the limit rod to place the braking module in a parking state;
the hook plate torsion spring is disposed on a rotation shaft of the hook plate for applying a spring force to the hook plate to maintain the hook plate engaged with the limit rod in the parking state; and
the auxiliary pedal is rotatably connected to the main pedal, and when the user depresses the auxiliary pedal, the hook plate is disengageable from the limit rod.

40. The outdoor garden working vehicle according to claim 39, wherein a holding force provided by the hook plate torsion spring to maintain contact between the hook plate and the limit rod is 5 N to 30 N.

41. The outdoor garden working vehicle according to claim 39, wherein when the user depresses the main pedal, at least one of two surfaces that first contact each other between the hook plate and the limit rod is curved, and depression of the main pedal by the user causes the hook plate to abut against the limit rod to rotate the hook plate, until an inner side of the hook plate passes around a cylindrical surface of the limit rod and engages with the limit rod.

42. The outdoor garden working vehicle according to claim 41, wherein upon depression of the auxiliary pedal by the user, the auxiliary pedal rotates and presses against the hook plate, causing the hook plate to rotate away from the limit rod and disengage from the limit rod.

43. The outdoor garden working vehicle according to claim 42, wherein a maximum rotation angle through which the hook plate shifts from an engaged state with the limit rod to a disengaged state from the limit rod upon the depression of the auxiliary pedal ranges from 10° to 30°.

44. The outdoor garden working vehicle according to claim 42, wherein a rotation angle of the auxiliary pedal upon the depression of the auxiliary pedal by the user ranges from 0° to 90°.

45. The outdoor garden working vehicle according to claim 39, wherein an auxiliary pedal torsion spring is disposed at a hinge between the auxiliary pedal and the main pedal, the auxiliary pedal torsion spring biasing the auxiliary pedal to remain in a non-pressing state relative to the hook plate when not depressed.

46. The outdoor garden working vehicle according to claim 39, wherein a depressing force applied by the user to the auxiliary pedal to disengage the hook plate from the limit rod ranges from 3 N to 100 N.

47. The outdoor garden working vehicle according to claim 36, wherein the foot pedal assembly and the foot brake pump form a mechanical advantage lever; when the user depresses the foot pedal assembly, a ratio of an input moment arm to an output moment arm of the mechanical advantage lever is 1-20: 1, and a depressing force applied by the user to the parking and service brake assembly to achieve braking is 20 N to 400 N.

48. The outdoor garden working vehicle according to claim 47, wherein the depressing force applied by the user to the foot pedal assembly to achieve braking is 30 N to 200 N.

49. The outdoor garden working vehicle according to claim 38, wherein the left drive axle assembly and the right drive axle assembly each employ a two-or-more-stage gear reducer, the gear reducer comprising an input shaft, an output shaft, and at least one intermediate shaft; and
each of the left brake component and the right brake component is disposed on a non-output shaft of the gear reducer of the corresponding drive axle assembly.

50. The outdoor garden working vehicle according to claim 49, wherein each of the left brake component and the right brake component is disposed on the intermediate shaft of the gear reducer of the corresponding drive axle assembly.

51. The outdoor garden working vehicle according to claim 50, wherein the left brake component and the right brake component each comprise a brake caliper mounted on the corresponding drive axle assembly, and a brake disc fixedly connected to the shaft on which the left brake component or the right brake component is disposed; when the user depresses the parking and service brake assembly, the brake caliper presses against the brake disc to generate a braking force.

52. The outdoor garden working vehicle according to claim 51, wherein the brake caliper of each of the left brake component and the right brake component comprises a caliper hydraulic cylinder, a caliper piston rod, and a friction pad; when the foot brake pump supplies braking pressure to the caliper hydraulic cylinder via the hydraulic tube, the caliper piston rod causes the friction pad to press against the brake disc to generate a braking force.

53. The outdoor garden working vehicle according to claim 52, wherein the brake caliper has a single cylinder bore, the caliper hydraulic cylinder is slidably mounted to the frame or the gear reducer of the corresponding drive axle assembly, the friction pad comprises a movable friction pad and a stationary friction pad, the movable friction pad being fixed to the caliper piston rod and located on one side of the brake disc, the stationary friction pad being disposed on an opposite side of the brake disc; when the foot brake pump supplies the braking pressure to the caliper hydraulic cylinder, the caliper piston rod pushes the movable friction pad and the stationary friction pad to clamp the brake disc.

54. The outdoor garden working vehicle according to claim 52, wherein the brake caliper has two cylinder bores, the caliper hydraulic cylinder is slidably mounted to the frame or the gear reducer of the corresponding drive axle assembly, two friction pads are fixed to the caliper piston rod and located on opposite sides of the brake disc; when the foot brake pump supplies the braking pressure to the caliper hydraulic cylinder, the caliper piston rod pushes the two friction pads to clamp the brake disc.

55. The outdoor garden working vehicle according to claim 53 or 54, wherein a floating mounting bracket is fixed to the frame or the gear reducer of the corresponding drive axle assembly, and the caliper hydraulic cylinder is slidably connected to the floating mounting bracket.

56. The outdoor garden working vehicle according to claim 51, wherein the brake disc has a thickness of 2 mm to 6 mm and a diameter of 60 mm to 300 mm.

57. The outdoor garden working vehicle according to claim 51, wherein the brake caliper has a hydraulic pressure range of 2 MPa to 20 MPa, and the caliper piston rod has a piston stroke of 0.5 mm to 10 mm.

58. The outdoor garden working vehicle according to claim 57, wherein the foot brake pump has a cylinder rod diameter of 10 mm to 30 mm, the caliper hydraulic cylinder has a diameter of 20 mm to 40 mm, and the foot brake pump has a cylinder rod stroke of 10 mm to 60 mm.

59. The outdoor garden working vehicle according to claim 50, wherein a reduction ratio between the intermediate shaft on which the left brake component or the right brake component is disposed and the corresponding output shaft is 1 to 50.

60. The outdoor garden working vehicle according to claim 59, wherein the left drive axle assembly and the right drive axle assembly each employ a 2-stage gear reducer, and the reduction ratio between the intermediate shaft on which the left brake component or the right brake component is disposed and the corresponding output shaft of the 2-stage gear reducer ranges from 3 to 6.

61. The outdoor garden working vehicle according to claim 37, wherein the braking module further comprises a micro switch for detecting whether the main pedal is depressed, and when detecting that the main pedal is depressed, the micro switch controls the left drive motor and the right drive motor to stop.

62. The outdoor garden working vehicle according to claim 61, wherein the micro switch is disposed on the frame, and a switch pressing plate is fixed to the rotating plate,
when the main pedal is in a naturally released state, the switch pressing plate presses the micro switch, and
when the user depresses the main pedal to rotate the rotating plate, the switch pressing plate moves out of contact with the micro switch, whereupon the micro switch triggers the left drive motor and the right drive motor to stop rotating.

63. The outdoor garden working vehicle according to claim 61, wherein a switch box is fixedly disposed on the fixing bracket, and the micro switch and the switch pressing plate are both mounted in the switch box.

64. The outdoor garden working vehicle according to claim 39, wherein a hydraulic brake force damping adjustment mechanism is provided at the foot brake pump for allowing the main pedal to be further depressed after hydraulic oil inside the foot brake pump has been compressed to a limit.

65. The outdoor garden working vehicle according to claim 64, wherein the hydraulic brake force damping adjustment mechanism comprises an oil pump bracket, a brake compression spring, and a bolt,
wherein the oil pump bracket is fixed to the frame, and the bolt sequentially passes through the foot brake pump and the brake compression spring and is threadedly connected to the brake pump bracket.

66. The outdoor garden working vehicle according to claim 65, wherein the brake compression spring remains in a compressed state; when the main pedal is in a naturally released state, the brake compression spring is in a first state; when the hook plate is engaged with the limit rod, the brake compression spring is in a second state; a compression amount of the brake compression spring in the second state is greater than that in the first state.

67. The outdoor garden working vehicle according to claim 66, wherein a difference in the compression amount of the brake compression spring between the second state and the first state is 1 mm to 60 mm.

68. The outdoor garden working vehicle according to claim 36, wherein an adjustment nut is disposed between the threaded push rod and the rotating plate, the adjustment nut being rotatably connected to the rotating plate, the threaded push rod being threadedly connected to the adjustment nut, and an end of the threaded push rod away from the adjustment nut abutting against the foot brake pump.

69. A ride-on lawn mower, comprising:
a frame;
a seat connected to the frame for a user to sit on;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a mowing mechanism disposed at a lower portion of the frame for cutting ground vegetation;
a power supply unit electrically connected to the left drive motor, the right drive motor, and the mowing mechanism, and configured to supply power to the left drive motor, the right drive motor, and the mowing mechanism; and
a braking module comprising a parking and service brake assembly, wherein depression of the parking and service brake assembly by the user generates a braking force on the left drive axle assembly and the right drive axle assembly,
wherein the parking and service brake assembly comprises a foot pedal assembly, and the foot pedal assembly comprises a main pedal and an auxiliary pedal, wherein depression of the main pedal by the user places the braking module into either a braking state or a parking state, and depression of the auxiliary pedal by the user releases the braking module from the parking state.

70. A lawn mower, comprising:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a working mechanism disposed at a lower portion of the frame for performing outdoor work on the ground;
a power supply unit electrically connected to the left drive motor, the right drive motor, and the working mechanism, and configured to supply power to the left drive motor, the right drive motor, and the working mechanism; and
a braking module comprising a parking and service brake assembly, wherein depression of the parking and service brake assembly by the user generates a braking force on the left drive axle assembly and the right drive axle assembly,
wherein the parking and service brake assembly comprises a foot pedal assembly, and the foot pedal assembly comprises a main pedal and an auxiliary pedal, wherein depression of the main pedal by the user places the braking module into either a braking state or a parking state, and depression of the auxiliary pedal by the user releases the braking module from the parking state.

71. An electric outdoor garden working vehicle, comprising:
a frame;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a working mechanism disposed at a lower portion of the frame for performing outdoor work on the ground;
a power supply unit electrically connected to the left drive motor, the right drive motor, and the working mechanism, and configured to supply power to the left drive motor, the right drive motor, and the working mechanism; and
a braking module comprising a parking and service brake assembly and a foot brake pump,
wherein the parking and service brake assembly comprises a foot pedal assembly, wherein when being depressed by the user, the foot pedal assembly presses the foot brake pump to generate a braking force on the left drive axle assembly and the right drive axle assembly.

72. The electric outdoor garden working vehicle according to claim 71, wherein a hydraulic brake force damping adjustment mechanism is provided at the foot brake pump for allowing the foot pedal assembly to be further depressed and moved after hydraulic oil inside the foot brake pump has been compressed to a limit.

73. The electric outdoor garden working vehicle according to claim 72, wherein the hydraulic brake force damping adjustment mechanism comprises an oil pump bracket and a damping member, the oil pump bracket being fixed to the frame, the damping member connecting the foot brake pump and the oil pump bracket.

74. The electric outdoor garden working vehicle according to claim 73, wherein the hydraulic brake force damping adjustment mechanism further comprises a guide member connected to the foot brake pump, the guide member being configured to restrict the foot brake pump to reciprocating motion only in a direction of being pressed by the foot pedal assembly.

75. The electric outdoor garden working vehicle according to claim 74, wherein the damping member is a damping compression spring, the guide member is a bolt, the bolt sequentially passes through the foot brake pump and the damping compression spring and is threadedly connected to the oil pump bracket.

76. The electric outdoor garden working vehicle according to claim 75, wherein the damping member has an initial damping force after assembly.

77. The electric outdoor garden working vehicle according to claim 71, wherein a limit rod is fixedly connected to the frame, the foot pedal assembly comprises a main pedal, a hook plate, and a hook plate torsion spring, the hook plate being rotatably connected to the main pedal;
when the user depresses the main pedal, the hook plate is engageable with the limit rod to place the braking module in a parking state;
the hook plate torsion spring is disposed on a rotation shaft of the hook plate for applying a spring force to the hook plate to maintain the hook plate engaged with the limit rod in the parking state.

78. The electric outdoor garden working vehicle according to claim 77, wherein when the user depresses the main pedal, at least one of two surfaces that first contact each other between the hook plate and the limit rod is curved, and depression of the main pedal by the user causes the hook plate to abut against the limit rod to rotate the hook plate, until an inner side of the hook plate passes around the limit rod and engages with the limit rod.

79. The electric outdoor garden working vehicle according to claim 77, wherein a holding force provided by the hook plate torsion spring to maintain contact between the hook plate and the limit rod is 5 N to 30 N.

80. The electric outdoor garden working vehicle according to claim 79, wherein the holding force provided by the hook plate torsion spring to maintain contact between the hook plate and the limit rod is 7 N.

81. The electric outdoor garden working vehicle according to claim 77, wherein when the main pedal is in a naturally released state, the damping compression spring is in a first state; when the hook plate is engaged with the limit rod, the damping compression spring is in a second state; and a compression amount of the brake compression spring in the second state is greater than that in the first state.

82. The electric outdoor garden working vehicle according to claim 80, wherein when the main pedal is in a naturally released state, the damping compression spring is in a first state; when the hook plate is engaged with the limit rod, the damping compression spring is in a second state; a compression amount of the brake compression spring in the second state is greater than that in the first state; and a difference in the compression amount of the damping compression spring between the second state and the first state is 1 mm to 60 mm.

83. The electric outdoor garden working vehicle according to claim 77, wherein the foot pedal assembly further comprises an auxiliary pedal, and depression of the auxiliary pedal by the user releases the braking module from the parking state.

84. The electric outdoor garden working vehicle according to claim 83, wherein the main pedal and the auxiliary pedal are configured to be depressed simultaneously or separately with a single foot.

85. The electric outdoor garden working vehicle according to claim 83, wherein the auxiliary pedal is movably connected to the main pedal, and upon depression of the auxiliary pedal by the user, the auxiliary pedal moves and presses against the hook plate, causing the hook plate to rotate away from the limit rod and disengage from the limit rod.

86. The electric outdoor garden working vehicle according to claim 85, wherein a maximum rotation angle through which the hook plate shifts from an engaged state with the limit rod to a disengaged state from the limit rod upon the depression of the auxiliary pedal ranges from 5° to 30°.

87. The electric outdoor garden working vehicle according to claim 83, wherein the auxiliary pedal is rotatably connected to the main pedal, and a rotation angle of the auxiliary pedal upon the depression of the auxiliary pedal by the user ranges from 0° to 90°.

88. The electric outdoor garden working vehicle according to claim 85, wherein an auxiliary pedal torsion spring is disposed at a hinge between the auxiliary pedal and the main pedal, the auxiliary pedal torsion spring biasing the auxiliary pedal to remain in a non-pressing state relative to the hook plate when not depressed.

89. The electric outdoor garden working vehicle according to claim 83, wherein the parking and service brake assembly further comprises a rotating plate and a brake spring, wherein the rotating plate is rotatably connected to the frame, the foot pedal assembly is fixedly connected to the rotating plate, two opposite ends of the brake spring are respectively connected to the frame and the rotating plate, and a threaded push rod is connected to the rotating plate;
when the user depresses the foot pedal assembly, the rotating plate rotates and pulls the brake spring, to push the threaded push rod to press against the foot brake pump and generate a braking force.

90. The outdoor garden working vehicle according to claim 82, further comprising a recognition module, a control system, and a reminder module,
wherein the recognition module is configured to detect whether the main pedal is depressed;
the control system comprises a vehicle control module, a motor control module, and a battery management module,
wherein the vehicle control module, the motor control module, and the battery management module are communicatively coupled with one another,
the battery management module is communicatively coupled with the power supply unit, and
the motor control module is communicatively coupled with the left drive motor and the right drive motor;
upon that the recognition module detects that the main pedal is depressed, the control system is configured to control the left drive motor and the right drive motor to stop rotating, and sends a braking state reminder to the user via the reminder module.

91. The outdoor garden working vehicle according to claim 90, wherein the recognition module comprises a micro switch disposed on the frame, and a switch pressing plate is fixed to the rotating plate,
when the main pedal is in a naturally released state, the switch pressing plate presses the micro switch, and
when the user depresses the main pedal to rotate the rotating plate, the switch pressing plate moves out of contact with the micro switch, whereupon the micro switch triggers the left drive motor and the right drive motor to stop rotating.

92. A ride-on outdoor garden working vehicle, comprising:
a frame;
a seat connected to the frame for a user to sit on;
a left drive axle assembly and a right drive axle assembly, wherein the left drive axle assembly is mechanically coupled between a left drive motor and a left drive wheel to transmit power from the left drive motor to the left drive wheel, and the right drive axle assembly is mechanically coupled between a right drive motor and a right drive wheel to transmit power from the right drive motor to the right drive wheel;
a working mechanism disposed at a lower portion of the frame for performing outdoor work on the ground;
a power supply unit electrically connected to the left drive motor, the right drive motor, and the working mechanism, and configured to supply power to the left drive motor, the right drive motor, and the working mechanism; and
a braking module comprising a parking and service brake assembly, wherein depression of the parking and service brake assembly by the user generates a braking force on the left drive axle assembly and the right drive axle assembly,
wherein the parking and service brake assembly comprises a foot pedal assembly, and the foot pedal assembly comprises a main pedal and an auxiliary pedal, wherein depression of the main pedal by the user places the braking module into either a braking state or a parking state, and depression of the auxiliary pedal by the user releases the braking module from the parking state.

93. A zero-turn lawn mower, comprising:
a frame;
a drive axle assembly comprising a left drive axle assembly and a right drive axle assembly, wherein each drive axle assembly of the left drive axle assembly and the right drive axle assembly is mechanically coupled between a drive motor and a drive wheel on a corresponding side to transmit power from the drive motor to the drive wheel;
a mowing mechanism disposed at a lower portion of the frame for cutting ground vegetation;
a power supply unit electrically connected to the drive motor of each drive axle assembly and the mowing mechanism, and configured to supply power to the drive motor and the mowing mechanism;
wherein each drive axle assembly comprises a housing and a plurality of shafts,
at least one of the shafts is connected to a neutral mechanism, the neutral mechanism being configured to be controlled to place the drive axle assembly in a neutral state or an engaged state;
wherein the drive axle assembly is configured to transmit power from the drive motor to the drive wheel in the engaged state, and to stop transmitting power from the drive motor to the drive wheel in the neutral state; and
wherein the plurality of shafts comprises:
an input shaft mechanically coupled to the drive motor, the drive motor rotating the input shaft; and
an output shaft coupled between the input shaft and the drive wheel, for outputting power from the drive motor to the drive wheel.

94. The zero-turn lawn mower according to claim 93, further comprising a recognition module, a control system, and a reminder module;
wherein the recognition module is configured to recognize whether the drive axle assembly is in the neutral state;
the control system comprises a vehicle control module, a motor control module, and a battery management module,
wherein the vehicle control module, the motor control module, and the battery management module are communicatively coupled with one another,
the battery management module is communicatively coupled with the power supply unit, and
the motor control module is communicatively coupled with the drive motor;
upon detecting that the drive axle assembly is in the neutral state, the recognition module is configured to send a neutral state reminder to the user via the reminder module.

95. The zero-turn lawn mower according to claim 93, wherein the neutral mechanism comprises an operating portion and an action portion connected to each other, wherein the action portion is configured to, under action of the operating portion, place the drive axle assembly in the neutral state or the engaged state.

96. The zero-turn lawn mower according to claim 95, wherein a sliding gear is disposed on the shaft on which the neutral mechanism is provided, the sliding gear is configured to transmit torque and slide along the shaft;
a fixing gear is disposed on another shaft adjacent to the shaft on which the neutral mechanism is provided;
the operating portion is configured to be controlled to drive the sliding gear to slide along its shaft to engage or disengage the sliding gear with the fixing gear; and
the drive axle assembly is in the engaged state when the sliding gear and the fixing gear are engaged, and the drive axle assembly is in the neutral state when the sliding gear and the fixing gear are disengaged.

97. The zero-turn lawn mower according to claim 96, wherein the sliding gear is in splined engagement with its respective shaft.

98. The zero-turn lawn mower according to claim 97, wherein an inner bore of the sliding gear is provided with an internal spline, and the shaft, on which the sliding gear is slidably connected, is provided with an external spline mating with the internal spline;
wherein axial sliding of the sliding gear along the external spline enables the drive axle assembly to be switched between the engaged state and the neutral state.

99. The zero-turn lawn mower according to claim 97, wherein the action portion comprises a neutral shifting member, and sliding of the neutral shifting member along the respective shaft drives the sliding gear to slide to switch the drive axle assembly between the engaged state and the neutral state.

100. The zero-turn lawn mower according to claim 99, wherein a groove is formed circumferentially in the sliding gear, and one end of the neutral shifting member is engaged in the groove.

101. The zero-turn lawn mower according to claim 100, wherein a sliding rod is connected to the neutral shifting member, the sliding rod being slidably connected to the housing.

102. The zero-turn lawn mower according to claim 101, wherein the operating portion comprises the sliding rod, the sliding rod extends through a side wall of the housing and is connected to a pull rod located outside the housing, and the pull rod is provided with a handle for manual grasping.

103. The zero-turn lawn mower according to claim 102, wherein the handle is located, in a horizontal direction, within an area inside an outer end surface of the housing, and, in a vertical direction, within an area below a center plane of the housing.

104. The zero-turn lawn mower according to claim 101, wherein a spring is sleeved on the sliding rod, opposite ends of the spring being respectively connected to the housing and the sliding rod, and the spring biases the sliding rod with a spring force tending to move the sliding rod to a state where the drive axle assembly is in the neutral state or the engaged state.

105. The zero-turn lawn mower according to claim 102, wherein a limiting plate connected to the handle is fixedly connected to an exterior of the housing, the limiting plate being configured to limit the handle to place the drive axle assembly in the neutral state or the engaged state.

106. The zero-turn lawn mower according to claim 103, wherein the limiting plate has two limiting grooves, wherein the drive axle assembly is configured to be in the neutral state when the handle is engaged in one of the limiting grooves, and the drive axle assembly is configured to be in the engaged state when the handle is engaged in the other one of the limiting grooves.

107. The zero-turn lawn mower according to claim 106, wherein the limiting plate is provided with a slide channel connecting the two limiting grooves, the handle being slidable along the slide channel between the one limiting groove and the other limiting groove;
the limiting plate is provided with a retaining member to prevent the handle from disengaging from a corresponding one of the limiting grooves due to vibration,
the retaining member comprises a limiting protrusion provided on a side wall of each of the limiting grooves, and
the handle, when in the limiting groove, is prevented from directly sliding into the slide channel by a combined action of the spring and the limiting protrusion.

108. The zero-turn lawn mower according to claim 96, wherein the plurality of shafts further comprises an intermediate shaft disposed between the input shaft and the output shaft, and the intermediate shaft is configured to transmit power from the input shaft to the output shaft; and
the sliding gear is disposed on the input shaft, and the fixing gear is disposed on the intermediate shaft adjacent to the input shaft.

109. The zero-turn lawn mower according to claim 102, wherein the operating portion comprises a hand brake and a hand brake cable connected to the sliding rod, and operating the hand brake to move the hand brake cable causes the sliding rod to move, thereby switching the drive axle assembly between the neutral state and the engaged state.

110. The zero-turn lawn mower according to claim 102, wherein the operating portion comprises a control switch and an electric linear actuator, the electric linear actuator is connected to the sliding rod, and manipulating the control switch causes the electric linear actuator to operate and drive the sliding rod to move, thereby switching the drive axle assembly between the neutral state and the engaged state.

111. The zero-turn lawn mower according to claim 95, wherein the operating portion comprises a control switch, the action portion comprises an electromagnetic clutch, and the shaft on which the electromagnetic clutch is provided is divided into a front shaft portion and a rear shaft portion arranged coaxially;
wherein the electromagnetic clutch comprises two synchronizers respectively disposed on the front shaft portion and the rear shaft portion;
the control switch is configured to control the two synchronizers to abut against each other or be separated from each other;
when the two synchronizers abut against each other, power is transmitted between the front shaft portion and the rear shaft portion, and the drive axle assembly is in the engaged state;
when the two synchronizers are separated from each other, power transmission is interrupted between the front shaft portion and the rear shaft portion, and the drive axle assembly is in the neutral state.

112. An outdoor garden working vehicle, comprising:
a frame;
a drive axle assembly comprising a left drive axle assembly and a right drive axle assembly, wherein each drive axle assembly of the left drive axle assembly and the right drive axle assembly is mechanically coupled between a drive motor and a drive wheel on a corresponding side to transmit power from the drive motor to the drive wheel;
a working mechanism disposed at a lower portion of the frame for performing outdoor work on the ground;
a power supply unit electrically connected to the drive motor of each drive axle assembly and the working mechanism, and configured to supply power to the drive motor and the working mechanism;
wherein each drive axle assembly comprises a housing and a plurality of shafts,
at least one of the shafts is connected to a neutral mechanism, the neutral mechanism being configured to be controlled to place the drive axle assembly in a neutral state or an engaged state;
wherein the drive axle assembly is configured to transmit power from the drive motor to the drive wheel in the engaged state, and to stop transmitting power from the drive motor to the drive wheel in the neutral state;
wherein the plurality of shafts comprises:
an input shaft mechanically coupled to the drive motor, the drive motor rotating the input shaft; and
an output shaft coupled between the input shaft and the drive wheel, for outputting power from the drive motor to the drive wheel.

113. A ride-on outdoor garden working vehicle, comprising:
a frame;
a seat connected to the frame for a user to sit on;
a drive axle assembly comprising a left drive axle assembly and a right drive axle assembly, wherein each drive axle assembly of the left drive axle assembly and the right drive axle assembly is mechanically coupled between a drive motor and a drive wheel on a corresponding side to transmit power from the drive motor to the drive wheel;
a working mechanism disposed at a lower portion of the frame for performing outdoor work on the ground;
a power supply unit electrically connected to the drive motor of each drive axle assembly and the working mechanism, and configured to supply power to the drive motor and the working mechanism;
wherein each drive axle assembly comprises a housing and a plurality of shafts,
at least one of the shafts is connected to a neutral mechanism, the neutral mechanism being configured to be controlled to place the drive axle assembly in a neutral state or an engaged state;
wherein the drive axle assembly is configured to transmit power from the drive motor to the drive wheel in the engaged state, and to stop transmitting power from the drive motor to the drive wheel in the neutral state;
wherein the plurality of shafts comprises:
an input shaft mechanically coupled to the drive motor, the drive motor rotating the input shaft; and
an output shaft coupled between the input shaft and the drive wheel, for outputting power from the drive motor to the drive wheel.
